(19)

Europäisches
Patentamt
European
Patent Office
Office européen
des brevets

(11) **EP 2 722 656 A1**

(12) **EUROPEAN PATENT APPLICATION**

(43) Date of publication:
**23.04.2014 Bulletin 2014/17**

(51) Int Cl.:
**G01G 19/414** *(2006.01)*      **G01B 11/02** *(2006.01)*
**G01B 11/25** *(2006.01)*      **G07B 17/00** *(2006.01)*

(21) Application number: **13186043.9**

(22) Date of filing: **25.09.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.10.2012 US 201261714394 P
05.03.2013 US 201313784933
05.03.2013 US 201313785177
15.03.2013 US 201361787414 P
11.06.2013 US 201361833517 P
01.07.2013 US 201361841717 P**

(71) Applicant: **Hand Held Products, Inc.
Fort Mill, SC 29707 (US)**

(72) Inventors:
• **Mccloskey, Scott**
  **Morristown, NJ New Jersey 07962-2245 (US)**
• **Wang, Ynjiun Paul**
  **Morristown, NJ New Jersey 07962-2245 (US)**
• **Lloyd, Ryan Andrew**
  **Morristown, NJ New Jersey 07962-2245 (US)**

• **Khurana, Himanshu**
  **Morristown, NJ New Jersey 07962-2245 (US)**
• **Smith, Taylor**
  **Morristown, NJ New Jersey 07962-2245 (US)**
• **Li, Jingquan**
  **Morristown, NJ New Jersey 07962-2245 (US)**
• **Jovanovski, Brian L.**
  **Morristown, NJ New Jersey 07962-2245 (US)**
• **Boyer, Richard M.**
  **Morristown, NJ New Jersey 07962-2245 (US)**
• **Giordano, Patrick Anthony**
  **Morristown, NJ New Jersey 07962-2245 (US)**
• **Good, Timothy**
  **Morristown, NJ New Jersey 07962-2245 (US)**
• **Kearney, Sean Phillip**
  **Morristown, NJ New Jersey 07962-2245 (US)**
• **Van Horn, Erik**
  **Morristown, NJ New Jersey 07962-2245 (US)**
• **Fletcher, Donna Marie**
  **Morristown, NJ New Jersey 07962-2245 (US)**

(74) Representative: **Houghton, Mark Phillip
Patent Outsourcing Limited
1 King Street
Bakewell, Derbyshire DE45 1DZ (GB)**

(54) **Integrated dimensioning and weighing system**

(57)      An object analysis system includes a scale for measuring the weight of the object, a range camera configured to produce a range image of an area in which the object is located, and a computing device configured to determine the dimensions of the object based, at least in part, on the range image. Methods for determining the dimensions of an object include capturing a range image and/or a visible image of a scene that includes the object.

Figure 1

EP 2 722 656 A1

**Description**

FIELD OF THE INVENTION

The present invention relates to the field of devices for weighing and dimensioning packages, more specifically, to an integrated dimensioning and weighing system for packages.

BACKGROUND

Shipping companies typically charge customers for their services based on package size (*i.e.*, volumetric weight) and/or weight (*i.e.*, dead weight). When printing a shipping label for a package to be shipped, a customer enters both the size and weight of the package into a software application that bills the customer based on the information. Typically, customers get this information by hand-measuring package's dimensions (*e.g.*, with a tape measure) and may weigh the package on a scale. In some cases, customers simply guess the weight of the package. Both guessing of the weight and hand-measurement of dimensions are prone to error, particularly when packages have irregular shape. When the shipping company determines, at a later time, that the package is larger and/or heavier than reported by the customer, an additional bill may be issued to the customer. Additional bills may reduce customer satisfaction, and, if the shipping customer is a retail company who has already passed along the shipping cost to an end customer, decrease the customer's earnings.

Furthermore, shipping companies may also collect the package's origin, destination, and linear dimensions from a customer to determine the correct charges for shipping a package. Manual entry of this information by a customer or the shipping company is also error prone.

As such, there is a commercial need for systems that accurately collect a package's size, weight, linear dimensions, origin, and destination and for integration with billing systems to reduce errors in transcribing that data.

SUMMARY

Accordingly, in one aspect, the present invention embraces an object analysis system. The system includes a scale for measuring the weight of the object, a range camera configured to produce a range image of an area in which the object is located, and a computing device configured to determine the dimensions of the object based, at least in part, on the range image.

In an exemplary embodiment, the range camera is configured to produce a visible image of the scale's measured weight of the object and the computing device is configured to determine the weight of the object based, at least in part, on the visible image. The scale may be an analog scale having a gauge and the visible image produced by the range camera includes the scale's gauge. Alternatively, the scale may be a digital scale having a display and the visible image produced by the range camera includes the scale's display.

In yet another exemplary embodiment, the computing device is configured to execute shipment billing software.

In yet another exemplary embodiment, the object analysis system transmits the weight of the object and determined dimensions to a host platform configured to execute shipment billing software.

In yet another exemplary embodiment, the object analysis system includes a microphone for capturing audio from a user and the computing device is configured for converting the captured audio to text.

In yet another exemplary embodiment, the range camera is configured to project a visible laser pattern onto the object and produce a visible image of the object and the computing device is configured to determine the dimensions of the object based, at least in part, on the visible image of the object.

In yet another exemplary embodiment, the scale and the range camera are fixed in position and orientation relative to each other and the computing device is configured to determine the dimensions of the object based, at least in part, on ground plane data of the area in which the object is located. The ground plane data may be generated by capturing an initial range image and identifying a planar region in the initial range image that corresponds to a ground plane.

In another aspect, the present invention embraces a method for determining the dimensions of an object that includes capturing a range image of a scene that includes the object and determining the dimensions of the object based, at least in part, on the range image and ground plane data of the area in which the object is located.

In yet another aspect, the present invention embraces a terminal for measuring at least one dimension of an object that includes a range camera, a visible camera, a display that are fixed in position and orientation relative to each other. The range camera is configured to produce a range image of an area in which the object is located. The visible camera is configured to produce a visible image of an area in which the object is located. The display is configured to present information associated with the range camera's field of view and the visible camera's field of view.

In an exemplary embodiment, the range camera's field of view is narrower than the visible camera's field of view and the display is configured to present the visible image produced by the visible camera and an outlined shape on the displayed visible image corresponding to the range camera's field of view.

In another exemplary embodiment, the display is configured to present the visible image produced by the visible camera and a symbol on the displayed visible image corresponding to the optical center of the range camera's field of view.

In yet another aspect, the present invention embraces a method for determining the dimensions of an object that includes projecting a laser pattern (*e.g.*, a visible laser pattern) onto the object, capturing an image of the projected pattern on the object, and determining the dimensions of the objection based, at least in part, on the captured image.

The foregoing illustrative summary, as well as other exemplary objectives and/or advantages of the invention, and the manner in which the same are accomplished, are further explained within the following detailed description and its accompanying drawings.

BRIEF DESCRIPTION OF THE DRAWINGS

Figure 1 illustrates an object analysis system in accordance with one or more exemplary embodiments.

Figure 2 illustrates a system for determining dimensions associated with an object in accordance with one or more embodiments of the present disclosure.

Figure 3 illustrates a method for determining dimensions associated with an object in accordance with one or more embodiments of the present disclosure.

Figure 4 is a schematic physical form view of one embodiment of a terminal in accordance with aspects of the present invention.

Figure 5 is a block diagram of the terminal of Figure 4.

Figure 6 is a diagrammatic illustration of one embodiment of an imaging subsystem for use in the terminal of Figure 4.

Figure 7 is a flowchart illustrating one embodiment of a method for measuring at least one dimension of an object using the terminal of Figure 4.

Figure 8 is an illustration of a first image of the object obtained using the fixed imaging subsystem of Figure 6.

Figure 9 is a view of the terminal of Figure 4 illustrating on the display the object disposed in the center of the display for use in obtaining the first image of Figure 8.

Figure 10 is a second aligned image of the object obtained using the movable imaging subsystem of Figure 6.

Figure 11 is a diagrammatic illustration of the geometry between an object and the image of the object on an image sensor array.

Figure 12 is a diagrammatic illustration of another embodiment of an imaging subsystem for use in the terminal of Figure 4, which terminal may include an aimer.

Figure 13 is a diagrammatic illustration of another embodiment of a single movable imaging subsystem and actuator for use in the terminal of Figure 4.

Figure 14 is an elevational side view of one implementation of an imaging subsystem and actuator for use in the terminal of Figure 4.

Figure 15 is a top view of the imaging subsystem and actuator of Figure 14.

Figure 16 is a timing diagram illustrating one embodiment for use in determining one or more dimensions and for decoding a decodable performed by the indicia reading terminal of Figure 4.

Figure 17 depicts the near field relationship between a laser pattern and a camera system's field of view as employed in an exemplary method.

Figure 18 depicts the far field relationship between a laser pattern and a camera system's field of view as employed in an exemplary method.

Figure 19 depicts an exemplary arrangement of a standard rectilinear box-shaped object on a flat surface upon which a laser pattern has been projected in accordance with an exemplary method.

Figure 20 schematically depicts a relationship between the width of a laser line and the size of the field of view of a small number of pixels within a camera system.

Figure 21 depicts the near field relationship between a laser pattern and a camera system's field of view as employed in an exemplary method.

Figure 22 depicts the far field relationship between a laser pattern and a camera system's field of view as employed in an exemplary method.

Figure 23 depicts the near field relationship between a laser pattern and a camera system's field of view as employed in an exemplary method.

Figure 24 depicts the far field relationship between a laser pattern and a camera system's field of view as employed in an exemplary method.

Figure 25 is a block diagram of an exemplary object-analysis system.

Figure 26 is a block diagram of an alternative embodiment of an exemplary object-analysis system.

Figure 27 is a flow chart illustrating an exemplary method of determining the dimensions of an object.

Figure 28 is a flow chart illustrating an alternative embodiment of an exemplary method of determining the dimensions of an object.

Figure 29 is a flow chart illustrating another exemplary method of determining the dimensions of an object.

DETAILED DESCRIPTION

The present invention embraces a system that accurately collects a package's size, weight, linear dimensions, origin, and destination and that may be integrated with billing systems to reduce errors in transcribing that data.

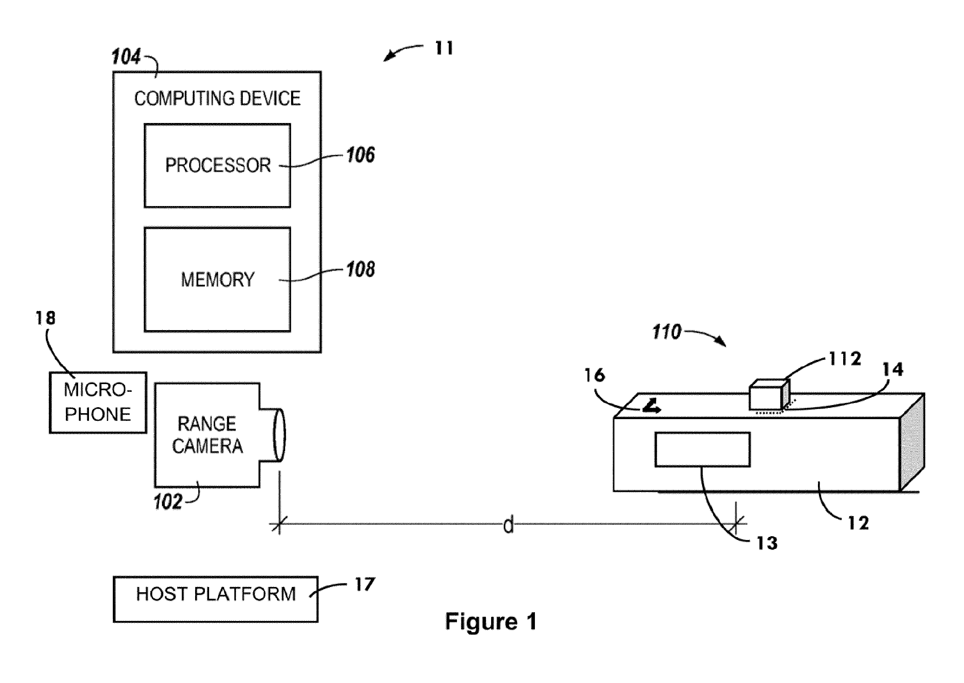

In one aspect, the present invention embraces an object analysis system. Figure 1 illustrates an exemplary object analysis system 11. As depicted, the system 11 includes a scale 12, a range camera 102, a computing device 104, and a microphone 18. Typically, the scale 12 measures the weight of the object 112, the range camera 102 is configured to produce a range image of an area 110 in which the object is located, and the computing device 104 is configured to determine the dimensions of the object 112 based, at least in part, on the range image.

As noted, the scale 12 measures the weight of the object 112. Exemplary scales 12 include analog scales having gauges or and digital scales having displays. The scale 12 of Figure 1 includes a window 13 for showing the measured weight of the object 112. The window 13 may be a gauge or display depending on the type of scale 12.

The scale 12 also includes top surface markings 14 to guide a user to place the object in a preferred orientation for analysis by the system. For example, a particular orientation may improve the range image and/or visible image produced by range camera 102. Additionally, the scale may include top surface markings 16 to facilitate the computing device's estimation of a reference plane during the process of determining the dimensions of the object 112.

In exemplary embodiments, the scale 12 transmits the measured weight of the object 112 to the computing device 104 and/or a host platform 17. In this regard, the scale 12 may transmit this information via a wireless connection and/or a wired connection (*e.g.*, a USB connection, such as a USB 1.0, 2.0, and/or 3.0).

As noted, the object analysis system 11 includes a range camera 102 that is configured to produce a range image of an area 110 in which the object 112 is located. In exemplary embodiments, the range camera 102 is also configured to produce a visible image of the scale's measured weight of the object 112 (*e.g.*, a visible image that includes window 13). The range camera 102 may be separate from the computing device 104, or the range camera 102 and the computing device 104 may be part of the same device. The range camera 102 is typically communicatively connected to the computing device 104.

The depicted object analysis system 11 includes a microphone 18. The microphone 18 may be separate from the range camera 102, or the microphone 18 and the range camera 102 may be part of the same device. Similarly, the microphone 18 may be separate from the computing device 104, or the microphone 18 and the computing device 104 may be part of the same device.

The microphone 18 captures audio from a user of the object analysis system 11, which may then be converted to text (*e.g.*, ASCII text). In exemplary embodiments, the text may be presented to the user via a user-interface for validation or correction (*e.g.*, by displaying the text on a monitor or by having a computerized reader speak the words back to the user). The text is typically used as an input for software (*e.g.*, billing software and/or dimensioning software). For example, the text (*i.e.*, as generated by converting audio from the user) may be an address, in which case the computing device may be configured to determine the components of the address. In this regard, exemplary object analysis systems reduce the need for error-prone manual entry of data.

Additionally, the text may be used as a command to direct software (*e.g.*, billing software and/or dimensioning software). For example, if multiple objects are detected in the range camera's field of view, a user interface may indicate a numbering for each object and ask the user which package should be dimensioned. The user could then give a verbal command by saying a number, and the audio as captured by the microphone 18 can be converted into text which commands the dimensioning software. Similarly, the user could give verbal commands to describe the general class of the object (*e.g.*, "measure a box") or to indicate the type of information being provided (*e.g.*, a command of "destination address" to indicate that an address will be provided next).

The computing device 104 may be configured for converting the audio captured by the microphone 18 to text. Additionally, the computing device 104 may be configured to transmit the captured audio (*e.g.*, as a file or a live stream) to a speech-to-text module and receive the text. The captured audio may be transcoded as necessary by the computing device 104. The computing device 104 may or may not include the speech-to-text module. For example, the computing device 104 may transmit (*e.g.*, via a network connection) the captured audio to an external speech-to-text service provider (*e.g.*, Google's cloud-based speech-to-text service). In exemplary embodiments, the speech-to-text module transmits the text and a confidence measure of each converted phrase. The computing device 104 may be configured to enter the text into shipment billing software (*e.g.*, by transmitting the text to a host platform 17 configured to execute shipment billing software).

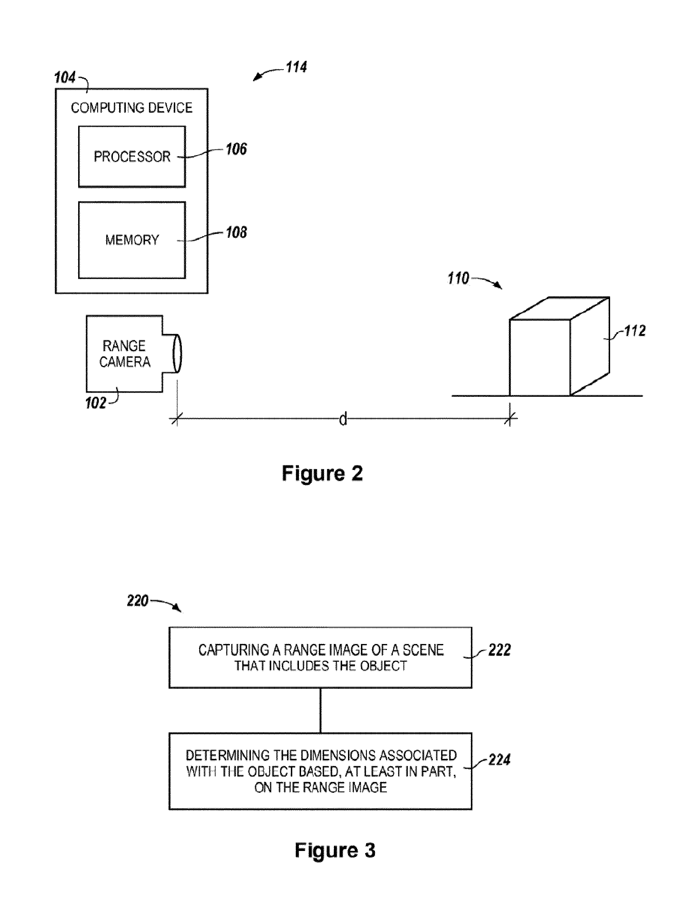

As noted, the object analysis system 11 includes a computing device 104. The computing device 104 depicted in Figure 1 includes a processor 106 and a memory 108. Additional aspects of processor 106 and memory 108 are discussed with respect to Figure 2. Memory 108 can store executable instructions, such as, for example, computer readable instructions (*e.g.*, software), that can be executed by processor 106. Although not illustrated in Figure 1, memory 108 can be coupled to processor 106.

The computing device 104 is configured to determine the dimensions of an object 112 based, at least in part, on a range image produced by range camera 102. Exemplary methods of determining the dimensions of an object 112 are discussed with respect to Figures 2-16. The computing device 104 may also be configured to determine the weight of an object 112 based, at least in part, on a visible image produced by range camera 102. For example, the computing device 104 may execute software that processes the visible image to read the weight measured by the scale 12.

The computing device 104 may be configured to calculate the density of the object 112 based on its determined dimensions and weight. Furthermore, the computing device 104 may be configured to compare the calculated density to a realistic density threshold (*e.g.*, as preprogrammed data or tables). If the calculated density exceeds a given realistic density threshold, the computing device 104 may: re-determine the dimensions of the object 112 based on the range image; instruct the range camera 102 to produce a new range image; instruct the range camera 102 to produce a new visible image and/or instruct the scale 12 to re-measure the object 112.

The computing device 104 may also be configured to compare the determined dimensions of the object 112 with the dimensions of the scale 12. In this regard, the scale's dimensions may be known (*e.g.*, as preprogrammed data or tables), and the computing device 104 may be configured to determine the dimensions of the object based on the range image and the known dimensions of the scale 12. Again, if the determined dimensions exceed a given threshold of comparison, the computing device 104 may: re-determine the dimensions of the object 112 based on the range image; instruct the range camera 102 to produce a new range image; instruct the range camera 102 to produce a new visible image and/or instruct the scale 12 to re-measure the object 112.

In exemplary embodiments, the computing device 104 may be configured to execute shipment billing software. In such embodiments, the computing device 104 may be a part of the same device as the host platform 17, or the object analysis system 11 may not include a host platform 17.

Alternatively, the object analysis system 11 may transmit (*e.g.*, via a wireless connection and/or a wired connection, such as a USB connection) the weight of the object 112 and determined dimensions to a host platform 17 configured to execute shipment billing software. For example, the computing device 104 may transmit the weight of the object 112 and determined dimensions to the host platform 17.

In exemplary embodiments, the range camera 102 is configured to project a laser pattern (*e.g.*, a visible laser pattern) onto the object 112 and produce a visible image of the object 112, and the computing device 104 is configured to determine the dimensions of the object 112 based, at least in part, on the visible image of the object 112. In this regard, the projection of the laser pattern on the object 112 provides additional information or an alternative or supplemental method for determining the dimensions of the object 112. Furthermore, the laser pattern will facilitate user-placement of the object with respect to the range camera.

An exemplary object analysis system 11 includes a scale 12 and a range camera 102 that are fixed in position and orientation relative to each other. The computing device 104 of such an exemplary object analysis system 11 may be configured to determine the dimensions of the object 112 based, at least in part, on ground plane data of the area 110 in which the object is located. The ground plane data may include data generated by capturing an initial range image and identifying a planar region in the initial range image that corresponds to a ground plane.

The ground plane data may be stored on the computing device 104 during manufacturing after calibrating the object analysis system 11. The ground plane data may also be updated by the computing device 104 after installation of the object analysis system 11 or periodically during use by capturing an initial range image and identifying a planar region in the initial range image that corresponds to a ground plane.

The computing device 104 may be configured to verify the validity of the ground plane data by identifying a planar region in the range image produced by the range camera 102 that corresponds to a ground plane. If the ground plane data does not correspond to the identified planar region in the range image, the computing device 104 may update the ground plane data.

In exemplary embodiments, the range camera's field of view may include multiple surfaces at different distances from the range camera 102. The ground plane data for each surface may be stored on the computing device 104 (*e.g.*, during a calibration step after setting the system up). In this regard, exemplary object analysis systems may include multiple platforms at different distance from the range camera 104 or a tiered platform having multiple surfaces at different distances from the range camera 102.

For example, the object analysis system 11 may be set up such that the range camera 102 is oriented such that its field of view includes a ground surface, a table surface, and a shelf surface. In such an orientation, the ground surface would typically be further away from the range camera than the table surface, which would typically be further away from the range camera than the shelf surface. The computing device 104 may store ground plane data for each of the surfaces to facilitate dimensioning. Furthermore, such an orientation would facilitate improved dimensioning because smaller objects may be placed on the surface closest to the range camera (*e.g.*, the shelf surface), medium-sized objects may be placed on the intermediate-distance surface (*e.g.*, the table surface), and larger objects may be placed on the surface furthest from the range camera (*e.g.*, the ground surface). Placing objects on the appropriate surface improves the accuracy of the dimensioning by assuring that the object is within the range camera's field of view and an appropriate distance from the range camera.

In exemplary embodiments, the computing device 104 may be configured to control the object analysis system in accordance with multiple modes. While in a detection mode, the computing device 104 may be configured to evaluate image viability and/or quality (*e.g.*, of an infra-red image or visible image) in response to movement or the placement of an object in the range camera's field of view. Based on the evaluation of the image viability and/or quality, the computing device 104 may be configured to place the object analysis system in another mode, such as an image capture mode for capturing an image using the range camera 102 or an adjust mode for adjusting the position of the range camera 102.

In exemplary embodiments, the object analysis system may include positioning devices, (*e.g.*, servo motors, tilt motors, and/or three-axis accelerometers) to change the position of the range camera relative to the object. In this regard, the computing device 104 may be configured to control and receive signals from the positioning devices. After evaluating image viability and/or quality, the computing device may place the object analysis system in an adjust mode. The computing device may be configured to have two adjust modes, semiautomatic and automatic. In semiautomatic adjust mode, the computing device may be configured to provide visual or audio feedback to an operator that then moves the range camera (*e.g.*, adjusts the camera's tilt angle and/or height). In automatic mode, the computing device may be configured to control and receive signals from the positioning devices to adjust the position of the range camera. By adjusting the position of the range camera, the object analysis system can achieve higher dimensioning accuracy.

In another aspect, the present invention embraces a method for determining the dimensions of an object. The method includes capturing a range image of a scene that includes the object and determining the dimensions of the object based, at least in part, on the range image and ground plane data of the area in which the object is located. As noted with respect to an exemplary object analysis system, the ground plane data may include data generated by capturing an initial range image and identifying a planar region in the initial range image that corresponds to a ground plane. The method may also include verifying the validity of the ground plane data by identifying a planar region in the range image that corresponds to a ground plane.

This exemplary method for determining the dimensions of an object is typically used in conjunction with a range camera on a fixed mount at a given distance and orientation with respect to the area in which the object is placed for dimensioning. In this regard, utilizing the ground plane data, rather than identifying the ground plane for each implementation of the method, can reduce the time and resources required to determine the dimensions of the object.

In exemplary embodiments, the method may include capturing a range image of a scene that includes an object and multiple surfaces (*i.e.*, two or more) at different distances and determining the dimensions of the object based, at least in part, on the range image and the ground plane data of the surface on which the object is resting. In this regard, the method may include determining, from the range image, the surface on which the object is resting. The method may also include prompting a user to identify the surface on which the object is resting (*e.g.*, after capturing the range image and/or if the surface on which the object is resting cannot be determined from the range image). The ground plane data may include data generated by capturing an initial range image and identifying the planar regions in the initial range image that correspond to the surfaces. The method may also include verifying the validity of each ground plane data set by identifying a planar region in the range image that corresponds to each surface. As noted with respect to the exemplary object analysis system including multiple surfaces at different distances, when an object is placed on a surface at the appropriate distance for its size, the dimensioning method's accuracy improves because the object is within the range image and located at an appropriate distance.

In yet another aspect, the present invention embraces another method for determining the dimensions of an object. The method includes projecting a laser pattern (*e.g.*, a visible laser pattern) onto an object, capturing an image of the projected pattern on the object, and determining the dimensions of the object based, at least in part, on the captured image. In an exemplary embodiment, the object has a rectangular box shape.

An exemplary method includes projecting a laser pattern (*e.g.*, a grid or a set of lines) onto a rectangular box. Typically, the box is positioned such that two non-parallel faces are visible to the system or device projecting the laser pattern and a camera system with known field of view characteristics. The camera system is used to capture an image of the laser light reflecting off of the box. Using image analysis techniques (*e.g.*, imaging software), the edges of the box are determined. The relative size and orientation of the faces is determined by comparing the distance between lines of the laser pattern in the captured image to the known distance between the lines of the laser pattern as projected while considering the characteristics of the camera system's field of view, such as size, aspect ratio, distortion, and/or angular magnification.

The distance from the camera system to the box may also be desired and may be used to determine the dimensions of the box. The distance between the camera system and the box can be determined using a variety of methods. For example, the distance from the camera system to the box may be determined from the laser pattern and the camera system's field of view. Additionally, sonar ranging techniques or considering the light time of flight may facilitate determination of this distance.

Another exemplary method includes projecting a laser pattern including two horizontal, parallel lines and two vertical, parallel lines. The distance between each set of parallel lines is constant. In this regard, the laser pattern is collimated, producing a constant-size square or rectangle in the center of the laser pattern as it propagates away from the device that generated the laser pattern.

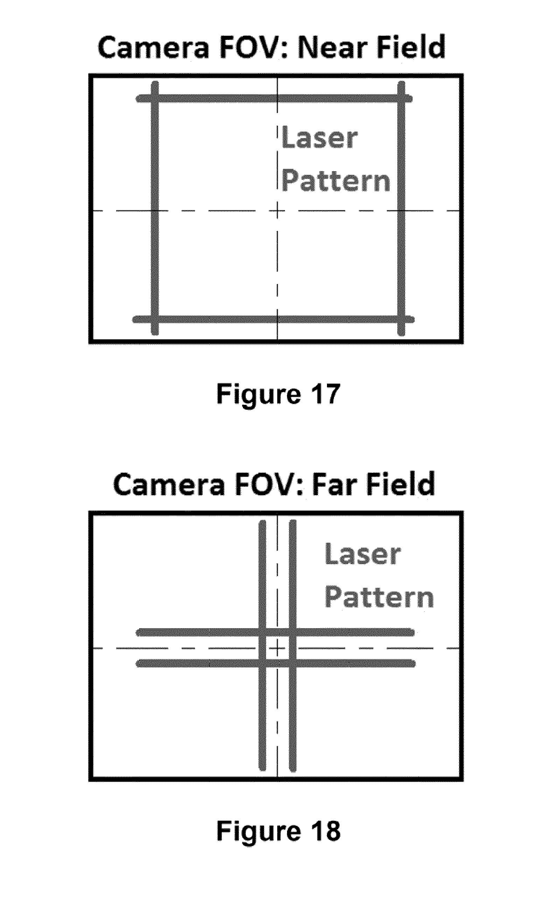

An exemplary laser pattern including two horizontal, parallel lines and two vertical, parallel lines is depicted in Figures 17 and 18. The exemplary laser pattern is aligned to the field of view of the camera system, and the relationship between the laser pattern and the field of view are determined. This relationship may be determined by a precision alignment of the laser pattern to a known fixture pattern and/or a software calibration process may process two or more images from the camera system. Figure 17 depicts the approximated relationship between the laser pattern and the camera's near-field field of view, and Figure 18 depicts the approximated relationship between the laser pattern and the camera's far-field field of view.

The exemplary method typically includes projecting the laser pattern onto two faces of a standard rectilinear box-shaped object such that the two horizontal laser lines are parallel to and on opposite side of the edge connecting the two faces (*i.e.*, one horizontal laser line above the edge and the other horizontal line below the edge). Additionally, the laser pattern is typically projected such that the laser pattern fully traverses the visible faces of the object.

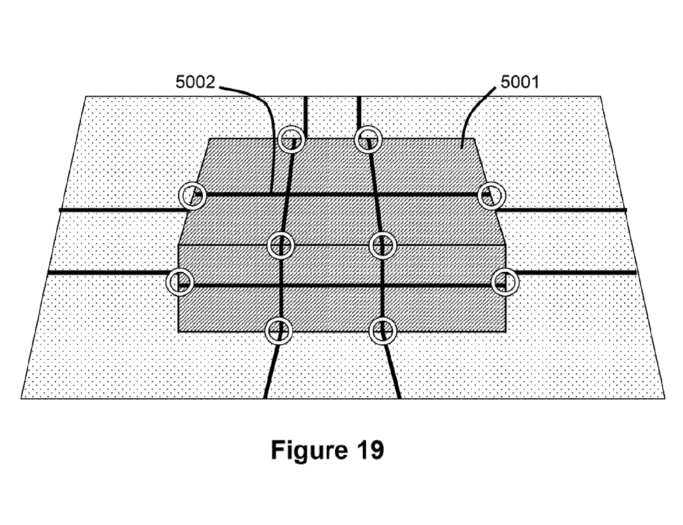

Figure 19 depicts an exemplary arrangement of a standard rectilinear box-shaped object 5001 upon which a laser pattern 5002 has been projected. As depicted, the two horizontal laser lines are parallel to and on opposite sides of the edge connecting the two faces. Additionally, the laser pattern 5002 fully traverses the visible faces of the object 5001. Accordingly, a number of break points, typically ten break points, are formed in the projected laser pattern 5002. These break points are identified in Figure 19 by open circles.

The exemplary method includes capturing an image of the projected laser pattern on the object (*e.g.*, with a camera system). The dimensions of the object are then determined, at least in part, from the captured image. For example, a processor may be used to process the image to identify the break points in the projected laser pattern. Using the known relationship between the laser pattern and the field of view, the break points may be translated into coordinates in a three-dimensional space. Typically, any two break points which are connected by a laser line segment can be used to calculate a dimension of the obj ect.

In an exemplary embodiment, the method includes determining the coordinates of the break points in a three-dimensional space based on the known size of the central rectangle (*e.g.*, a square). In other words, the known size of the rectangle is used as a ruler or measuring stick in the image to determine the dimensions of the object.

Exemplary methods include projecting a laser pattern including laser lines having a profile with a small divergence angle. In other words, the width of the laser lines increases as the distance from the device projecting the pattern increases. The divergence angle is typically between about 1 and 30 milliradians (*e.g.*, between about 2 and 20 milliradians). In an exemplary embodiment, the divergence angle is between about 3 and 10 milliradians (*e.g.*, about 6 milliradians).

In exemplary embodiments, the laser lines' divergence angle corresponds to the divergence of a small number of pixels (*e.g.*, between about 2 and 10 pixels) within the camera system used to capture an image. Thus, as the field of view of this small number of pixels expands with increasing distance from the camera system, the width of the laser lines increases at a similar rate. Accordingly, the width of the laser lines covers approximately the same number of pixels, although not necessarily the same set of pixels, regardless of the projected laser pattern's distance from the camera system.

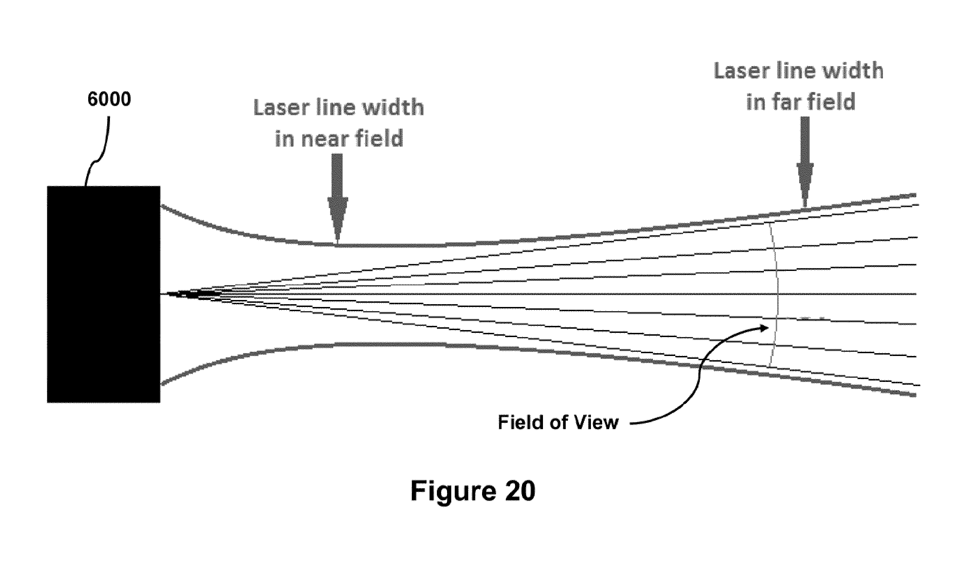

In another exemplary embodiment, the laser pattern includes laser lines having a profile with a divergence angle such that the width of the laser line in the far field corresponds to the field of view of a small number of pixels in the far field. In this regard, the divergence angle of the laser lines does not necessarily match the field of view of the small number of pixels in the near field. Figure 20 schematically depicts such a relationship between the laser lines' width and the field of view of a small number of pixels within a camera system. The depicted device 6000 includes the camera system and a laser projecting module.

Exemplary methods utilizing a laser pattern that includes laser lines having a profile with a small divergence angle prevents the loss of resolution in the far field. When projected laser lines are conventionally collimated, the laser lines appear increasingly thinner on a target object as the distance between the laser projection module and the target object increases. If the reflected light from a projected laser line falls on an area of the camera system's sensor that is approximately one pixel wide or smaller, the precision of the dimensioning method can be no greater than one pixel. In contrast, when projected laser lines have a profile with a small divergence angle, the projected line has an energy distribution encompassing multiple pixels facilitating a more precise determination of the center of the projected line. Accordingly, methods employing projected laser lines having a profile with a small divergence angle facilitate measurements that exceed the resolution of the camera pixel sampling.

In exemplary embodiments, the laser projection device and the camera system used in the dimensioning method are positioned such that the camera system is located at the approximate center of the projected laser pattern. In other words, the laser pattern is projected such that the center of the laser pattern (*e.g.*, the center of the projected square) aligns with the center of the camera system's field of view. Figures 17 and 18 depict a laser pattern projected such that the center of the laser pattern aligns with the center of the camera system's field of view. Such an alignment typically assures that the projected laser pattern is within the camera system's field of view over the camera system's working range for purposes of the dimensioning method (*i.e.*, over the range of distances within which the camera system's focal abilities and resolution permit reliable dimensioning or the camera system's dimensioning range). Typically, such positioning of the laser projection device and the camera system is achieved using an integrated device for projecting the laser pattern and capturing images. It is within the scope of the present invention, however, to use multiple devices to project the laser pattern and/or capture images such that the center of the laser pattern aligns with the center of the camera system's field of view.

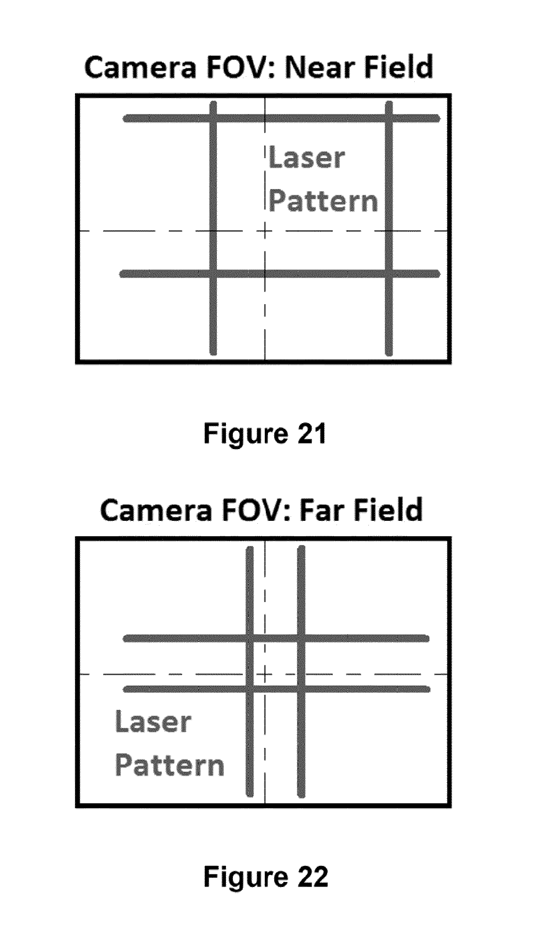

That said, the laser projection device and the camera system may be positioned such that the camera system is not located at the approximate center of the projected laser pattern. For example, the laser projection device and the camera system may be positioned such that the camera system is not at the center of the laser pattern, but is still within the central feature of the projected laser pattern. For example, if the projected laser pattern is two horizontal, parallel lines and two vertical, parallel lines as depicted in Figures 21 and 22, the camera system may be positioned within the central square of the laser pattern, although not necessarily the center. Despite imperfect alignment, such an alignment typically assures that the projected laser pattern is within the camera system's field of view over the camera system's maximum working range for purposes of the dimensioning method. In this regard, the camera system's maximum working range corresponds to the camera system's working range for purposes of a dimensioning method when using a projected laser pattern aligned with the center of the camera system's field of view (*e.g.*, as depicted in Figures 17 and 18). Such positioning of the laser projection device and the camera system may be achieved using an integrated device for projecting the laser pattern and capturing images, but may also be achieved using a conventional camera system (*i.e.*, not modified to specifically project a laser pattern) and a detachable projector for projecting the laser pattern. In this regard, the ability to use a detachable projector (*i.e.*, a projector that mechanically attaches to an imaging system or camera system) provides significant cost advantages over an integrated device.

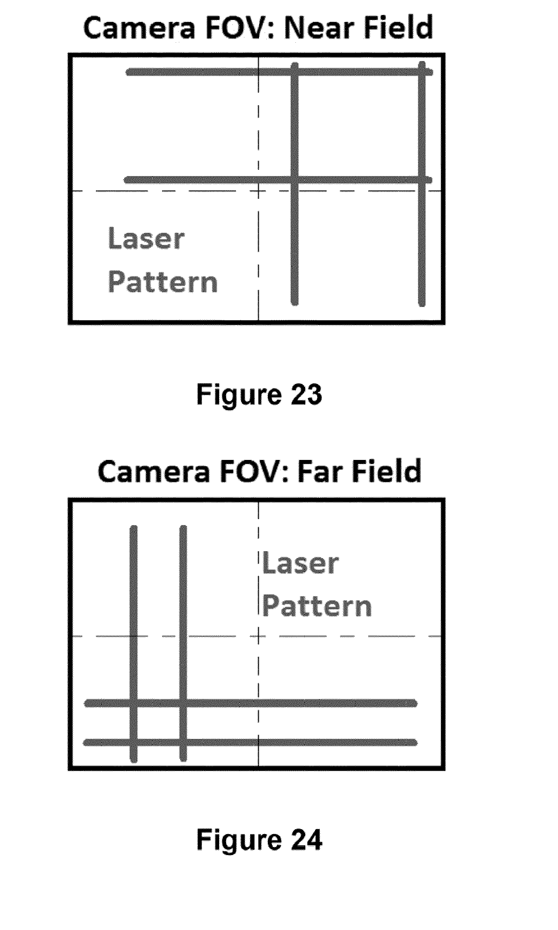

Furthermore, the laser projection device and the camera system may be positioned such that the camera system is not within the central feature of the projected laser pattern. For example, if the projected laser pattern is two horizontal, parallel lines and two vertical, parallel lines as depicted in Figures 23 and 24, the camera system may be positioned outside of the central square of the laser pattern. In such an embodiment, the camera system is positioned such that the projected laser pattern is within the camera system's field of view over a substantial portion (*e.g.*, about 25 percent or more) of the camera system's maximum working range for purposes of a dimensioning method.

Typically, the camera system and projector are positioned such that the projected laser pattern is within the camera system's field of view over between about 35 percent and 95 percent of the camera system's maximum working range for purposes of a dimensioning method. More typically, the camera system and projector are positioned such that the projected laser pattern is within the camera system's field of view over between about 45 percent and 90 percent of the camera system's maximum working range for purposes of a dimensioning method. The camera system and projector may be positioned such that the projected laser pattern is within the camera system's field of view over between about 50 percent and 85 percent of the camera system's maximum working range for purposes of a dimensioning method. In exemplary embodiments, the camera system and projector are positioned such that the projected laser pattern is within the camera system's field of view over between about 55 percent and 80 percent of the camera system's maximum working range for purposes of a dimensioning method. Exemplary embodiments may include positioning the camera system and projector such that the projected laser pattern is within the camera system's field of view over between about 60 percent and 75 percent of the camera system's maximum working range for purposes of a dimensioning method. The camera system and projector may be positioned such that the projected laser pattern is within the camera system's field of view over between about 65 percent and 70 percent of the camera system's maximum working range for purposes of a dimensioning method.

As noted, the camera system's maximum working range corresponds to the camera system's working range for purposes of a dimensioning method when using a projected laser pattern aligned with the center of the camera system's field of view (*e.g.*, as depicted in Figures 17 and 18). Such positioning of the laser projection device and the camera system may be achieved using an integrated device for projecting the laser pattern and capturing images, but may also be achieved using a conventional camera system (*i.e.*, not modified to specifically project a laser pattern) and a detachable projector for projecting the laser pattern. Again, the ability to use a detachable projector provides significant cost advantages over an integrated device.

In an exemplary embodiment, the camera system may be the camera system of a tablet device (*e.g.*, an Apple iPad, an Android-based tablet, an Amazon Kindle device, or a tablet running Microsoft's Windows operating system). Tablet devices are typically thin, primarily touch-screen operated devices having a width and a length that are significantly greater than the device's thickness. In such embodiments, the projector for projecting the laser pattern may be a detachable projector having a projector module that projects the laser pattern at a larger angle to the optical axis of the camera system by projecting the pattern from a location on the tablet device that is a significant distance from the camera system's location on the tablet device. The larger angle between the projector and the optical axis of the camera system increases the dimensioning method's range of operation and resolving capability, thereby facilitating the detection of an object's edges. In this regard, there may be a large physical separation (*e.g.*, the length, width, or diagonal dimension of the tablet) between the tablet's camera system and the projector module.

Exemplary methods may also employ a tablet device's processor and display. In this regard, the method may include determining the dimensions of the object using the tablet device's processor. The method may also include displaying the camera system's field of view using the tablet device's display. Additionally, the method may include displaying the determined dimensions of the object using the tablet device's display. Finally, the method may include displaying instructions (*e.g.*, written words and/or symbols, such as arrows) on the tablet device's display to prompt the user to adjust the orientation of the tablet device with respect to the object.

In an exemplary embodiment, the camera system may be capable of capturing invisible wavelengths of light (*e.g.*, infrared light) and the projector may project a visible laser pattern and an invisible laser pattern (i. e., a laser pattern of light having a wavelength or wavelengths that are invisible to the unaided user's eye). In such an embodiment, the projector may project the visible pattern to facilitate the user's positioning of an object with respect to the camera system and project the invisible pattern to be used as a reference in the dimensioning method. The dimensioning method may include using the visible laser pattern as well as the invisible pattern to determine the dimensions of an object. Alternatively, the method may include filtering out the visible laser pattern and determining the dimensions of an object using the invisible laser pattern.

The visible laser pattern may be different from the invisible laser pattern. In this regard, the visible laser pattern may be a pattern that particularly facilitates the user's positioning or orientation of an object, while the invisible laser pattern may be a pattern that is particularly beneficial for purposes of dimensioning. That said, the visible laser pattern and the invisible laser pattern may be the same.

Furthermore, the dimensioning method may include projecting the visible laser pattern, the invisible laser pattern, and no laser pattern in consecutive frames as captured by the camera system. For example, the projector may effectively rotate between projecting the visible laser pattern, the invisible laser pattern, and no laser pattern for time periods corresponding to the camera system's frame rate. The dimensioning method may include comparing the frames captured by the camera system during the projection of the visible laser pattern, the invisible laser pattern, and no laser pattern to determine the dimensions of an obj ect.

In yet another aspect, the present invention embraces a terminal for measuring at least one dimension of an object. The terminal includes a range camera, a visible camera (*e.g.*, a grayscale and/or RGB sensor), and a display that are fixed in position and orientation relative to each other. The range camera is configured to produce a range image of an area in which an object is located, and the visible camera is configured to produce a visible image of an area in which the object is located. The display is configured to present information associated with the range camera's field of view and the visible camera's field of view.

Typically, the range camera's field of view is narrower than the visible camera's field of view. To facilitate accurate dimensioning, the display is configured to present the visible image produced by the visible camera and an outlined shape on the displayed visible image corresponding to the range camera's field of view (*e.g.*, a rectangle). The outlined shape shows the user of the terminal when the object to be dimensioned is within the range camera's field of view. In other words, the interior of the outlined shape typically corresponds to the intersection or overlap between the visible image and the range image.

In exemplary embodiments, the display is configured to present information associated with the optimal orientation of the range camera and visible camera with respect to the object. Such information further facilitates accurate dimensioning by encouraging the user to adjust the orientation of the terminal to an orientation that accelerates or improves the dimensioning process.

The display may be configured to present the visible image produced by the visible camera and a symbol on the displayed visible image corresponding to the optical center of the range camera's field of view. Again, presenting such a symbol on the display facilitates accurate dimensioning by encouraging the user to adjust the orientation of the terminal to an orientation that accelerates or improves the dimensioning process.

In exemplary embodiments, the symbol shown by the display is a crosshair target having three prongs. When the object is a rectangular box, the display may be configured to show the three prongs of the crosshairs on the displayed visible image in an orientation that corresponds to the optimal orientation of the range camera and visible camera with respect to a corner of the rectangular box.

When the object to be dimensioned is cylindrically shaped (*e.g.*, having a medial axis and base), the display may be configured to show the visible image produced by the visible camera and a line on the displayed visible image in an orientation that corresponds to the optimal orientation of the range camera and visible camera with respect to the medial axis of the object. The display may also be configured to show the visible image produced by the visible camera and an ellipse on the displayed visible image in an orientation that corresponds to the optimal orientation of the range camera and visible camera with respect to the base of the object.

As noted, the configuration of the terminal's display presents information associated with the range camera's field of view and the visible camera's field of view. The information helps the user determine the three degrees of freedom and/or the three degrees of freedom for translation of the camera relative to the object that will ensure or at least facilitate an accurate measurement of the object.

In exemplary embodiments, the terminal may include a processor that is configured to automatically initiate a dimensioning method when the orientation of the terminal with respect to an object corresponds to an orientation that accelerates or improves the dimensioning process. Automatically initiating the dimensioning method in this manner prevents any undesirable motion of the terminal that may be induced when an operator presses a button or other input device on the terminal. Additionally, automatically initiating the dimensioning method typically improves the accuracy of the dimensioning method.

As noted, the terminal's display may be configured to present information associated with the optimal orientation of the range camera and visible camera with respect to the object. The terminal's processor may be configured to analyze the output of the display (*i.e.*, the visible image and the information associated with the optimal orientation) and initiate the dimensioning method (*e.g.*, including capturing a range image) when the orientation information and the visible image align. The terminal's processor may be configured to analyze the output of the display using imaged-based edge detection methods (*e.g.*, a Canny edge detector).

For example, if the orientation information presented by the display is a crosshair target having three prongs, the processor may be configured to analyze the output of the display using edge detection methods and, when the combined edge strengths of the three prongs and three of the object's edges (*i.e.*, at a corner) exceed a threshold, the processor automatically initiates a dimensioning method. In other words, when the three prongs align with the object's edges, the processor automatically initiates a dimensioning method. Typically, the edge detection methods are only applied in the central part of the display's output image (*i.e.*, near the displayed orientation information) to reduce the amount of computation.

In exemplary embodiments, the display is configured to present information associated with the optimal distance of the terminal from the object. Such information further facilitates accurate dimensioning by encouraging the user to position the terminal at a distance from the object that accelerates or improves the dimensioning process. For example, the range camera of the terminal typically has a shorter depth of view than does the visible camera. Additionally, when objects are very close to the terminal the range camera typically does not work as accurately, but the visible camera functions normally. Thus, when viewing the visible image produced by the visible camera on the display, objects outside of the range camera's optimal range (*i.e.*, either too close or too far from the terminal to accurately determine the object's dimensions) appear normal.

Accordingly, the display may be configured to present the visible image produced by the visible camera modified such that portions of the visible image corresponding to portions of the range image with high values (*e.g.*, distances beyond the range camera's optimal range) are degraded (*e.g.*, a percentage of the pixels corresponding to the range image's high values are converted to a different color, such as white or grey). The amount of degradation (*e.g.*, the percentage of pixels converted) typically corresponds to the range image's value beyond the upper end of the range camera's optimal range. In other words, the amount of degradation occurs such that the clarity of objects in the displayed visible image corresponds to the range camera's ability to determine the object's dimensions. The amount of degradation may begin at a certain low level corresponding to a threshold distance from the terminal, increase linearly up to a maximum distance after which the degradation is such that the visible image is no longer displayed (*e.g.*, only grey or white is depicted).

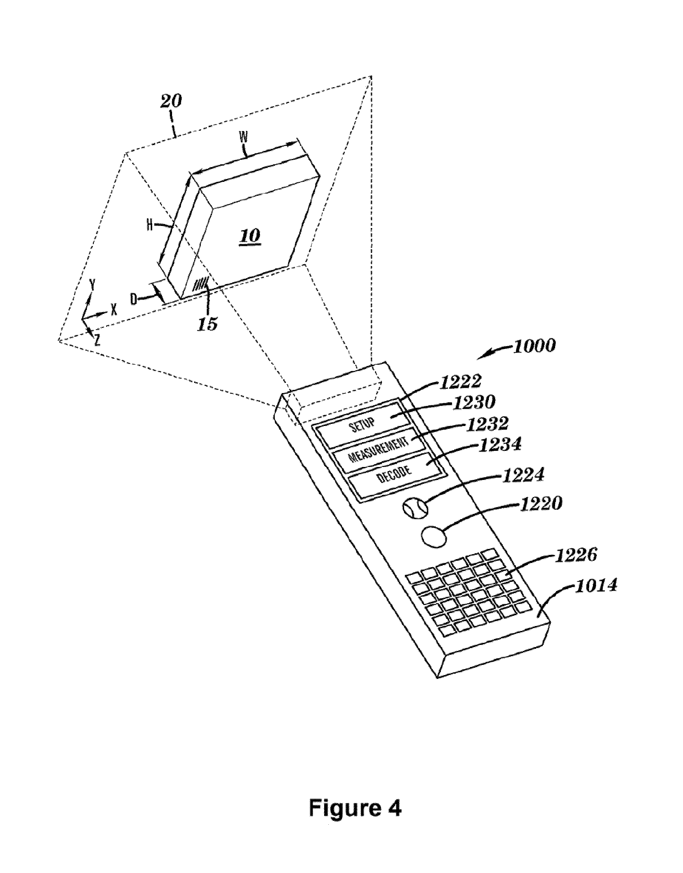

Similarly, the display may be configured to present the visible image produced by the visible camera modified such that portions of the visible image corresponding to portions of the range image with low values (*e.g.*, distances less than the range camera's optimal range) are degraded (*e.g.*, a percentage of the pixels corresponding to the range image's high values are converted to a different color, such as black or grey). The amount of degradation (*e.g.*, the percentage of pixels converted) may correspond to the range image's value under the lower end of the range camera's optimal range. Typically, the degradation is complete (*i.e.*, only black or grey) if the range image's value is less than the lower end of the range camera's optimal range. Additional aspects of an exemplary terminal and dimensioning method are described herein with respect to Figures 4-16.

An exemplary method of determining the dimensions of an object using a range camera is described in U.S. Patent Application No. 13/278,559 filed at the U.S. Patent and Trademark Office on October 21, 2011 and titled "*Determining Dimensions Associated with an Object*," which is hereby incorporated by reference in its entirety.

In this regard, devices, methods, and systems for determining dimensions associated with an object are described herein. For example, one or more embodiments include a range camera configured to produce a range image of an area in which the object is located, and a computing device configured to determine the dimensions of the object based, at least in part, on the range image.

One or more embodiments of the present disclosure can increase the automation involved in determining the dimensions associated with (*e.g.*, of) an object (*e.g.*, a box or package to be shipped by a shipping company). For example, one or more embodiments of the present disclosure may not involve an employee of the shipping company physically contacting the object during measurement (*e.g.*, may not involve the employee manually measuring the object and/or manually entering the measurements into a computing system) to determine its dimensions. Accordingly, one or more embodiments of the present disclosure can decrease and/or eliminate the involvement of an employee of the shipping company in determining the dimensions of the object. This can, for example, increase the productivity of the employee, decrease the amount of time involved in determining the object's dimensions, reduce and/or eliminate errors in determining the object's dimensions (*e.g.*, increase the accuracy of the determined dimensions), and/or enable a customer to check in and/or pay for a package's shipping at an automated station (*e.g.*, without the help of an employee), among other benefits.

In the following description, reference is made to Figures 2 and 3 that form a part hereof. The drawings show by way of illustration how one or more embodiments of the disclosure may be practiced. These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in Figures 2 and 3 are intended to illustrate the embodiments of the present disclosure, and should not be taken in a limiting sense. As used in the disclosure of this exemplary dimensioning method, "a" or "a number of something can refer to one or more such things. For example, "a number of planar regions" can refer to one or more planar regions.

Figure 2 illustrates a system 114 for determining dimensions associated with (*e.g.*, of) an object 112 in accordance with one or more embodiments of the present disclosure of this exemplary dimensioning method. In the embodiment illustrated in Figure 2, object 112 is a rectangular shaped box (*e.g.*, a rectangular shaped package). However, embodiments of the present disclosure are not limited to a particular object shape, object scale, or type of object. For example, in some embodiments, object 112 can be a cylindrical shaped package. As an additional example, object 112 could be a rectangular shaped box with one or more arbitrarily damaged faces.

As shown in Figure 2, system 114 includes a range camera 102 and a computing device 104. In the embodiment illustrated in Figure 2, range camera 102 is separate from computing device 104 (*e.g.*, range camera 102 and computing device 104 are separate devices). However, embodiments of the present disclosure are not so limited. For example, in some embodiments, range camera 102 and computing device 104 can be part of the same device (*e.g.*, range camera 102 can include computing device 104, or vice versa). Range camera 102 and computing device 104 can be coupled by and/or communicate via any suitable wired or wireless connection (not shown in Figure 2).

As shown in Figure 2, computing device 104 includes a processor 106 and a memory 108. Memory 108 can store executable instructions, such as, for example, computer readable instructions (*e.g.*, software), that can be executed by processor 106. Although not illustrated in Figure 2, memory 108 can be coupled to processor 106.

Memory 108 can be volatile or nonvolatile memory. Memory 108 can also be removable (*e.g.*, portable) memory, or non-removable (*e.g.*, internal) memory. For example, memory 108 can be random access memory (RAM) (*e.g.*, dynamic random access memory (DRAM) and/or phase change random access memory (PCRA)), read-only memory (ROM) (*e.g.*, electrically erasable programmable read-only memory (EEPROM) and/or compact-disc read-only memory (CD-ROM)), flash memory, a laser disc, a digital versatile disc (DVO) or other optical disk storage, and/or a magnetic medium such as magnetic cassettes, tapes, or disks, among other types of memory.

Further, although memory 108 is illustrated as being located in computing device 104, embodiments of the present disclosure are not so limited. For example, memory 108 can also be located internal to another computing resource (*e.g.*, enabling computer readable instructions to be downloaded over the Internet or another wired or wireless connection).

In some embodiments, range camera 102 can be part of a handheld and/or portable device, such as a barcode scanner. In some embodiments, range camera 102 can be mounted on a tripod.

Range camera 102 can produce (*e.g.*, capture, acquire, and/or generate) a range image of an area (*e.g.*, scene). Range camera 102 can produce the range image of the area using, for example, structured near-infrared (near-IR) illumination, among other techniques for producing range images.

The range image can be a two-dimensional image that shows the distance to different points in the area from a specific point (*e.g.*, from the range camera). The distance can be conveyed in real-world units (*e.g.*, metric units such as meters or millimeters), or the distance can be an integer value (*e.g.*, 11-bit) that can be converted to real-world units. The range image can be a two-dimensional matrix with one channel that can hold integers or floating point values. For instance, the range image can be visualized as different black and white shadings (*e.g.*, different intensities, brightnesses, and/or darknesses) and/or different colors in any color space (e.g., RGB or HSV) that correspond to different distances between the range camera and different points in the area.

For example, range camera 102 can produce a range image of an area (*e.g.*, area 110 illustrated in Figure 2) in which object 112 is located. That is, range camera 102 can produce a range image of an area that includes object 112.

Range camera 102 can be located a distance d from object 112 when range camera 102 produces the range image, as illustrated in Figure 2. Distance d can be, for instance, 0.75 to 5.0 meters. However, embodiments of the present disclosure are not limited to a particular distance between the range camera 102 and the object 112.

The range image produced by range camera 102 can be visualized as black and white shadings corresponding to different distances between range camera 102 and different portions of object 112. For example, the darkness of the shading can increase as the distance between range camera 102 and the different portions of object 112 decreases (*e.g.*, the closer a portion of object 112 is to range camera 102, the darker the portion will appear in the range image). Additionally and/or alternatively, the range image can be visualized as different colors corresponding to the different distances between range camera 102 and the different portions of object 112. Computing device 104 can determine the dimensions (*e.g.*, the length, width, height, diameter, etc.) of object 112 based, at least in part, on the range image produced by range camera 102. For instance, processor 106 can execute executable instructions stored in memory 108 to determine the dimensions of object 112 based, at least in part, on the range image.

For example, computing device 104 can identify a number of planar regions in the range image produced by range camera 102. The identified planar regions may include planar regions that correspond to object 112 (e.g., to surfaces of object 112). That is, computing device 104 can identify planar regions in the range image that correspond to object 112. For instance, in embodiments in which object 112 is a rectangular shaped box (*e.g.*, the embodiment illustrated in Figure 2), computing device 104 can identify two or three mutually orthogonal planar regions that correspond to surfaces (*e.g.*, faces) of object 112 (*e.g.*, the three surfaces of object 112 shown in Figure 2).

Once the planar regions that correspond to object 112 have been identified, computing device 104 can determine the dimensions of object 112 based, at least in part, on the identified planar regions (*e.g.*, on the dimensions of the identified planar regions). For example, computing device 104 can determine the dimensions of the planar regions that correspond to object 112. For instance, computing device 104 can determine the dimensions of the planar regions that correspond to object 112 based, at least in part, on the distances of the planar regions within the range image. Computing device 104 can then determine the dimensions of object 112 based, at least in part, on the dimensions of the planar regions.

Computing device 104 can identify the planar regions in the range image that correspond to object 112 by, for example, determining (*e.g.*, calculating) coordinates (*e.g.*, real-world x, y, z coordinates in millimeters) for each point (*e.g.*, each row, column, and depth tuple) in the range image. Intrinsic calibration parameters associated with range camera 102 can be used to convert each point in the range image into the real-world coordinates. The system can undistort the range image using, for example, the distortion coefficients for the camera to correct for radial, tangential, and/or other types of lens distortion. In some embodiments, the two-dimensional matrix of the real-world coordinates may be downsized by a factor between 0.25 and 0.5.

Computing device 104 can then build a number of planar regions through the determined real-world coordinates. For example, a number of planar regions can be built near the points, wherein the planar regions may include planes of best fit to the points. Computing device 104 can retain the planar regions that are within a particular (*e.g.*, predefined) size and/or a particular portion of the range image. The planar regions that are not within the particular size or the particular portion of the range image can be disregarded.

Computing device 104 can then upsample each of the planar regions (*e.g.*, the mask of each of the planar regions) that are within the particular size and/or the particular portion of the range image to fit in an image of the original (*e.g.*, full) dimensions of the range image. Computing device 104 can then refine the planar regions to include only points that lie within an upper bound from the planar regions.

Computing device 104 can then fit a polygon to each of the planar regions that are within the particular size and/or the particular portion of the range image, and retain the planar regions whose fitted polygon has four vertices and is convex. These retained planar regions are the planar regions that correspond to object 112 (*e.g.*, to surfaces of object 112). The planar regions whose fitted polygon does not have four vertices and/or is not convex can be disregarded. Computing device 104 can also disregard the planar regions in the range image that correspond to the ground plane and background clutter of area 110.

Computing device 104 can disregard (*e.g.*, ignore) edge regions in the range image that correspond to the edges of area 110 while identifying the planar regions in the range image that correspond to object 112. For example, computing device 104 can run a three dimensional edge detector on the range image before identifying planar regions in the range image, and can then disregard the detected edge regions while identifying the planar regions. The edge detection can also identify non-uniform regions that can be disregarded while identifying the planar regions.

Once the planar regions that correspond to object 112 have been identified, computing device 104 can determine the dimensions of object 112 based, at least in part, on the identified planar regions (*e.g.*, on the dimensions of the identified planar regions). For example, computing device 104 can determine the dimensions of object 112 by arranging the identified planar regions (*e.g.*, the planar regions whose fitted polygon has four vertices and is convex) into a shape corresponding to the shape of object 112, and determining a measure of centrality (*e.g.*, an average) for the dimensions of clustered edges of the arranged shape. The dimensions of the edges of the arranged shape correspond to the dimensions of object 112.

Once the arranged shape (*e.g.*, the bounding volume of the object) is constructed, computing device 104 can perform (*e.g.*, run) a number of quality checks. For example, in embodiments in which object 112 is a rectangular shaped box, computing device 104 can determine whether the identified planar regions fit together into a rectangular arrangement that approximates a true rectangular box within (*e.g.*, below) a particular error threshold.

In some embodiments, computing device 104 can include a user interface (not shown in Figure 2). The user interface can include, for example, a screen that can provide (*e.g.*, display and/or present) information to a user of computing device 104. For example, the user interface can provide the determined dimensions of object 112 to a user of computing device 104.

In some embodiments, computing device 104 can determine the volume of object 112 based, at least in part, on the determined dimensions of object 112. Computing device 104 can provide the determined volume to a user of computing device 104 via the user interface.

Figure 3 illustrates a method 220 for determining dimensions associated with (*e.g.*, of) an object in accordance with one or more embodiments of the present disclosure. The object can be, for example, object 112 previously described in connection with Figure 2. Method 220 can be performed, for example, by computing device 104 previously described in connection with Figure 2.

At block 222, method 220 includes capturing a range image of a scene that includes the object. The range image can be, for example, analogous to the range image previously described in connection with Figure 2 (*e.g.*, the range image of the scene can be analogous to the range image of area 110 illustrated in Figure 2), and the range image can be captured in a manner analogous to that previously described in connection with Figure 2.

At block 224, method 220 includes determining the dimensions (*e.g.*, the length, width, height, diameter, etc.) associated with the object based, at least in part, on the range image. For example, the dimensions associated with (*e.g.*, of) the object can be determined in a manner analogous to that previously described in connection with Figure 2. In some embodiments, the volume of the object can be determined based, at least in part, on the determined dimensions associated with the object.

As an additional example, determining the dimensions associated with the object can include determining the dimensions of the smallest volume rectangular box large enough to contain the object based, at least in part, on the range image. The dimensions of the smallest volume rectangular box large enough to contain the object can be determined by, for example, determining and disregarding (*e.g.*, masking out) the portion (*e.g.*, part) of the range image containing information (*e.g.*, data) associated with (*e.g.*, from) the ground plane of the scene that includes the object, determining (*e.g.*, finding) the height of a plane that is parallel to the ground plane and above which the object does not extend, projecting additional (*e.g.*, other) portions of the range image on the ground plane, and determining (*e.g.*, estimating) a bounding rectangle of the projected portions of the range image on the ground plane.

Although specific embodiments have been illustrated and described herein, those of ordinary skill in the art will appreciate that any arrangement calculated to achieve the same techniques can be substituted for the specific embodiments shown. This disclosure of exemplary methods of determining the dimensions of an object is intended to cover any and all adaptations or variations of various embodiments of the disclosure.

An exemplary method of determining the dimensions of an object and an exemplary terminal for dimensioning objects are described in U.S. Patent Application No. 13/471,973 filed at the U.S. Patent and Trademark Office on May 15, 2012 and titled "*Terminals and Methods for Dimensioning Objects*," which is hereby incorporated by reference in its entirety.

Figure 4 illustrates one embodiment of a terminal 1000 operable for measuring at least one dimension of an object 10 in accordance with aspects of the present invention. For example, terminal 1000 may determine a height H, a width W, and a depth D of an object. In addition, terminal 1000 may be operable to read a decodable indicia 15 such as a barcode disposed on the object. For example, the terminal may be suitable for shipping applications in which an object such as a package is subject to shipping from one location to another location. The dimension (dimensioning) information and other measurement (*e.g.*, volume measurement information) respecting object 10 may be used, *e.g.*, to determine a cost for shipping a package or for determining a proper arrangement of the package in a shipping container.

In one embodiment, a terminal in accordance with aspects of the present invention may include at least one or more imaging subsystems such as one or more camera modules and an actuator to adjust the pointing angle of the one or more camera modules to provide true stereo imaging. The terminal may be operable to attempt to determine at least one of a height, a width, and a depth based on effecting the adjustment of the pointing angle of the one or more camera modules.

For example, a terminal in accordance with aspects of the present invention may include at least one or more imaging subsystems such as camera modules and an actuator based on wires of nickel-titanium shape memory alloy (SMA) and an associated control and heating ASIC (application-specific integrated circuit) to adjust the pointing angle of the one or more camera modules to provide true stereo imaging. Using true stereo imaging, the distance to the package can be determined by measuring the amount of drive current or voltage drop across the SMA actuator. The terminal may be operable to attempt to determine at least one of a height, a width, a depth, based on the actuator effecting the adjustment of the pointing angle of the one or more camera modules, the measured distance, and the obtained image of the object.

With reference still to Figure 4, terminal 1000 in one embodiment may include a trigger 1220, a display 1222, a pointer mechanism 1224, and a keyboard 1226 disposed on a common side of a hand held housing 1014. Display 1222 and pointer mechanism 1224 in combination can be regarded as a user interface of terminal 1000. Terminal 1000 may incorporate a graphical user interface and may present buttons 1230, 1232, and 1234 corresponding to various operating modes such as a setup mode, a spatial measurement mode, and an indicia decode mode, respectively. Display 1222 in one embodiment can incorporate a touch panel for navigation and virtual actuator selection in which case a user interface of terminal 1000 can be provided by display 1222. Hand held housing 1014 of terminal 1000 can in another embodiment be devoid of a display and can be in a gun style form factor. The terminal may be an indicia reading terminal and may generally include hand held indicia reading terminals, fixed indicia reading terminals, and other terminals. Those of ordinary skill in the art will recognize that the present invention is applicable to a variety of other devices having an imaging subassembly which may be configured as, for example, mobile phones, cell phones, satellite phones, smart phones, telemetric devices, personal data assistants, and other devices.

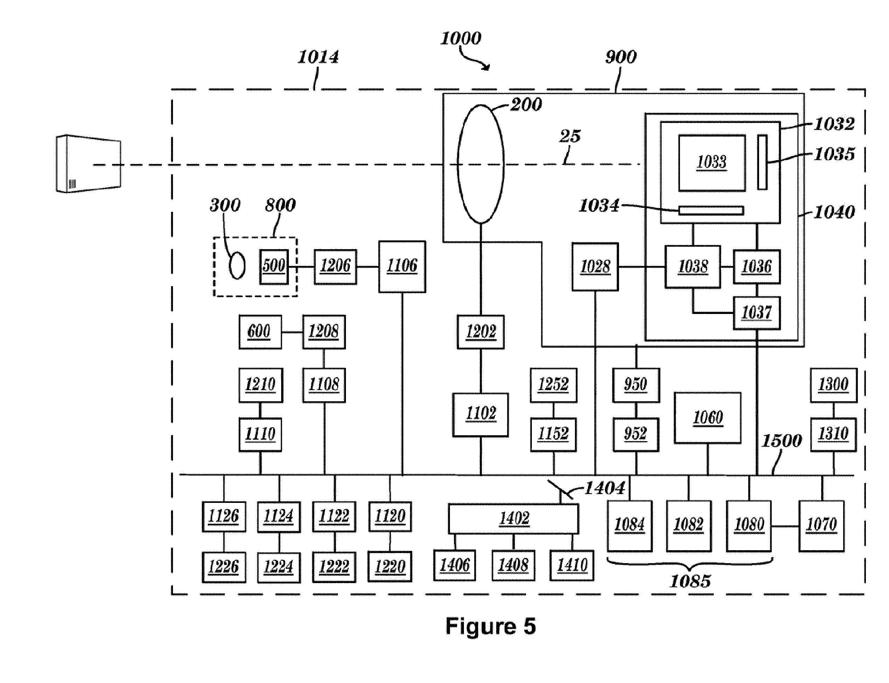

Figure 5 depicts a block diagram of one embodiment of terminal 1000. Terminal 1000 may generally include at least one imaging subsystem 900, an illumination subsystem 800, hand held housing 1014, a memory 1085, and a processor 1060. Imaging subsystem 900 may include an imaging optics assembly 200 operable for focusing an image onto an image sensor pixel array 1033. An actuator 950 is operably connected to imaging subsystem 900 for moving imaging subsystem 900 and operably connected to processor 1060 (Figure 5) via interface 952. Hand held housing 1014 may encapsulate illumination subsystem 800, imaging subsystem 900, and actuator 950. Memory 1085 is capable of storing and or capturing a frame of image data, in which the frame of image data may represent light incident on image sensor array 1033. After an exposure period, a frame of image data can be read out. Analog image signals that are read out of array 1033 can be amplified by gain block 1036 converted into digital form byanalog-to-digital converter 1037 and sent to DMA unit 1070. DMA unit 1070, in turn, can transfer digitized image data into volatile memory 1080. Processor 1060 can address one or more frames of image data retained in volatile memory 1080 for processing of the frames for determining one or more dimensions of the object and/or for decoding of decodable indicia represented on the object.

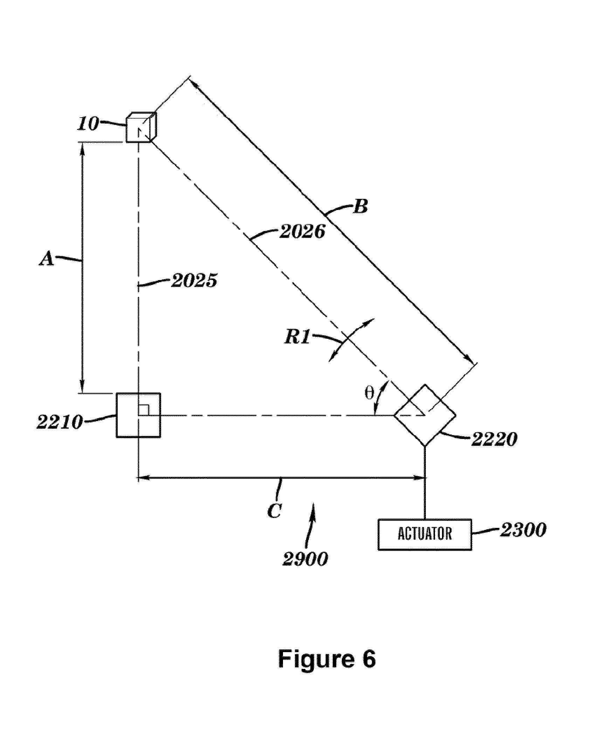

Figure 6 illustrates one embodiment of the imaging subsystem employable in terminal 1000. In this exemplary embodiment, an imaging subsystem 2900 may include a first fixed imaging subsystem 2210, and a second movable imaging subsystem 2220. An actuator 2300 may be operably connected to imaging subsystem 2220 for moving imaging subsystem 2220. First fixed imaging subsystem 2210 is operable for obtaining a first image or frame of image data of the object, and second movable imaging subsystem 2220 is operable for obtaining a second image or frame of image data of the object. Actuator 2300 is operable to bring the second image into alignment with the first image as described in greater detail below. In addition, either the first fixed imaging subsystem 2210 or the second movable imaging subsystem 2220 may also be employed to obtain an image of decodable indicia 15 (Figure 4) such as a decodable barcode.

Figures 6-10 illustrate one embodiment of the terminal in a spatial measurement mode. For example, a spatial measurement mode may be made active by selection of button 1232 (Figure 4). In a spatial measurement operating mode, terminal 1000 (Figure 4) can perform one or more spatial measurements, *e.g.*, measurements to determine one or more of a terminal to target distance (z distance) or a dimension (*e.g.*, h, w, d) of an object or another spatial related measurement (*e.g.*, a volume measurement, a distance measurement between any two points).

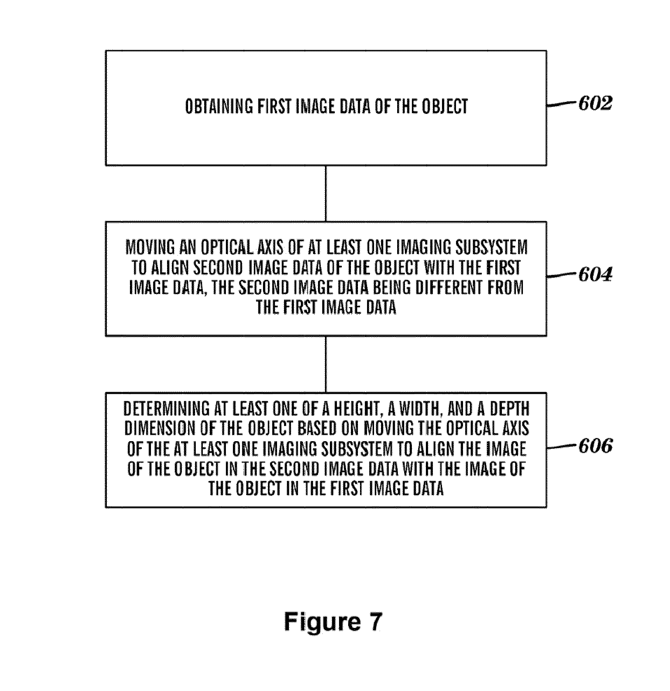

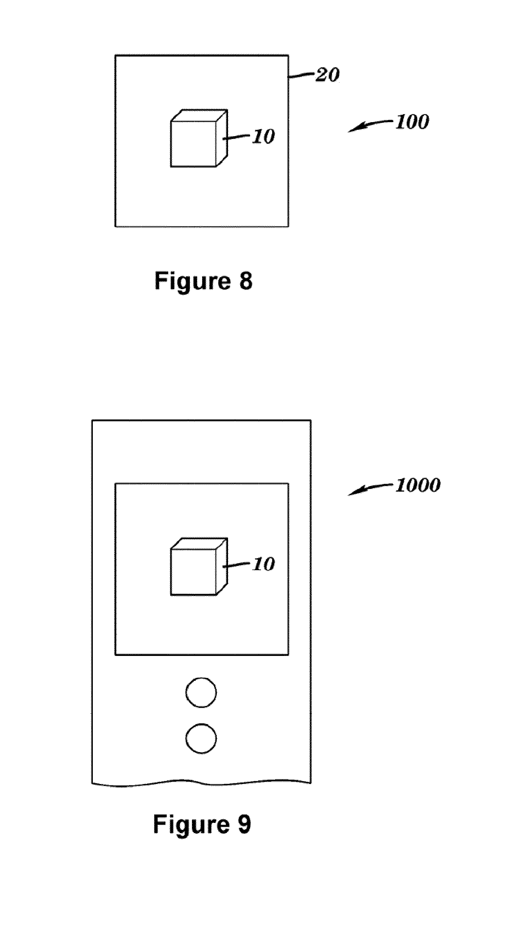

Initially, at block 602 as shown in Figure 7, terminal 10 may obtain or capture first image data, *e.g.*, at least a portion of a frame of image data such as a first image 100 using fixed imaging subsystem 2210 (Figure 6) within a field of view 20 (Figures 4 and 8). For example, a user may operate terminal 1000 to display object 10 using fixed imaging subsystem 2210 (Figure 6) in the center of display 1222 as shown in Figure 9. Terminal 1000 can be configured so that block 602 is executed responsively to trigger 1220 (Figure 4) being initiated. With reference again to FIGURE 3, imaging the object generally in the center of the display results when the object is aligned with an imaging axis or optical axis 2025 of fixed imaging subsystem 2210. For example, the optical axis may be a line or an imaginary line that defines the path along which light propagates through the system. The optical axis may passes through the center of curvature of the imaging optics assembly and may be coincident with a mechanical axis of imaging subsystem 2210.

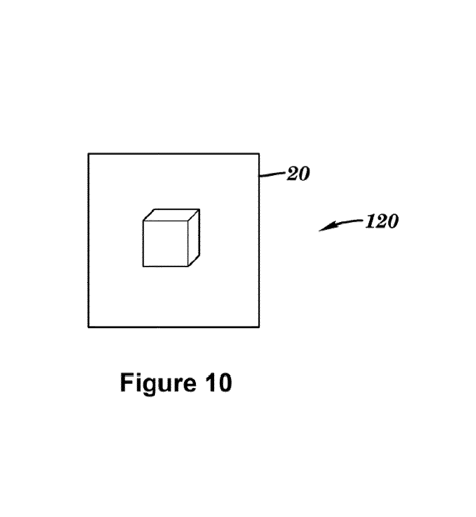

With reference again to Figure 7, at 604, terminal 1000 may be adapted to move an optical axis 2026 (Figure 6) of movable imaging subsystem 2220 (Figure 6) using actuator 2300 (Figure 6) to align second image data, *e.g.*, at least a portion of a frame of image data such as a second image 120 using movable imaging subsystem 2220 (Figure 6) within a field of view 20 (Figures 4 and 10) with the first image data. As shown in Figure 6, optical axis 2026 of imaging subsystem 2220 may be pivoted, tilted or deflected, for example in the direction of double-headed arrow R1 in response to actuator 2300 to align the second image of the object with the object in the first image.

For example, the terminal may include a suitable software program employing a subtraction routine to determine when the image of the object in the second image data is aligned with the object in the first image data. The closer the aligned images of the object are, the resulting subtraction of the two images such as subtracting the amplitude of the corresponding pixels of the imagers will become smaller as the images align and match. The entire images of the object may be compared, or a portion of the images of the object may be compared. Thus, the better the images of the object are aligned, the smaller the subtracted difference will be.

A shown in Figure 7, at 606, an attempt to determine at least one of a height, a width, and a depth dimension of the object is made based on moving the optical axis of the movable imaging subsystem to align the image of the object in the second image data with the image of the object in the first image data. For example, the position of the angle of the optical axis is related to the distance between the terminal and the object, and the position of the angle of the optical axis and/or the distance between the terminal and the object may be used in combination with the number of pixels used for imaging the object in the image sensor array to the determine the dimensions of the object.

With reference again to Figure 6, the angle of the optical axis of the movable imaging subsystem relative to the terminal is related to the distance from the movable imaging subsystem (*e.g.*, the front of the images sensor array) to the object (*e.g.*, front surface, point, edge, etc.), and the angle of the optical axis of the movable imaging subsystem relative to the terminal is related to the distance from the fixed imaging subsystem (*e.g.*, the front of the images sensor array) to the object (*e.g.*, front surface, point, edge, etc.).

For example, the relationship between an angle $\Theta$ of the optical axis of the movable imaging subsystem relative to the terminal, a distance A from the fixed imaging subsystem to the object, and a distance C between the fixed imaging subsystem and the movable imaging subsystem may be expressed as follows:

$$\tan \Theta = A/C.$$

The relationship between angle $\Theta$ of the optical axis of the movable imaging subsystem relative to the terminal, a distance B from the fixed imaging subsystem to the object, and distance C between the fixed imaging subsystem and the movable imaging subsystem may be expressed as follows:

$$\cos \Theta = C / B.$$

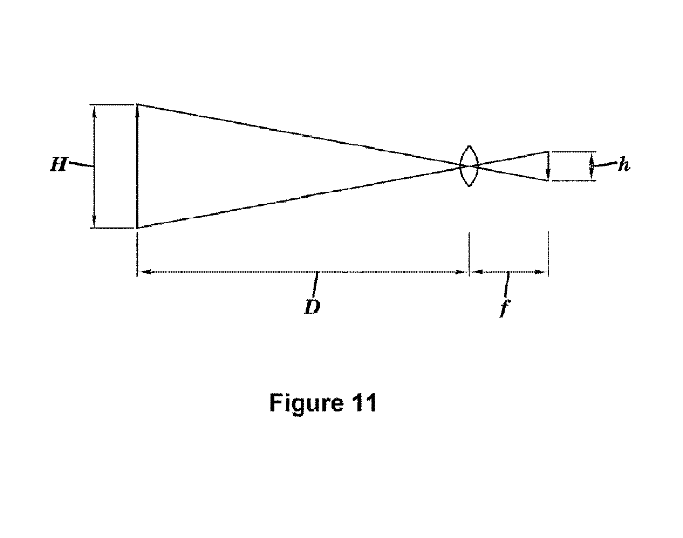

With reference to Figure 11, the actual size of an object relative to the size of the object observed on an image sensor array may be generally defined as follows:

$$\frac{h}{f} = \frac{H}{D}.$$

where h is a dimension of the object (such as height) of the object on the image sensor array, f is focal length of the imaging optics lens, H is a dimension of the actual object (such as height), and D is distance from the object to the imaging optic lens.

With reference to measuring, for example a height dimension, knowing the vertical size of the imaging sensor (*e.g.*, the height in millimeters or inches) and number of pixels vertically disposed along the imaging sensor, the height of the image of the object occupying a portion of the imaging sensor would be related to a ratio of the number of pixels forming the imaged object to the total pixels disposed vertically along the image sensor.

For example, a height of an observed image on the imaging senor may be determined as follows:

$$h = \frac{observed\ object\ image\ height\ (pixels)}{height\ of\ sensor\ (pixels)} \times height\ of\ sensor\ (e.g.,\ in\ inches).$$

In one embodiment, an actual height measurement may be determined as follows:

$$H = \frac{D \times h}{f}.$$

For example, where an observed image of the object is 100 pixels high, and a distance D is 5 feet, the actual object height would be greater than when the observed image of the object is 100 pixels high, and a distance D is 2 feet. Other actual dimensions (*e.g.*, width and depth) of the object may be similarly obtained.

From the present description, it will be appreciated that the terminal may be setup using a suitable setup routine that is accessed by a user or by a manufacturer for coordinating the predetermined actual object to dimensioning at various distances, *e.g.*, coordinate a voltage or current reading required to effect the actuator to align the object in the second image with the image of the object in the first image, to create a lookup table. Alternatively, suitable programming or algorithms employing, for example, the relationships described above, may be employed to determine actual dimensions based on the number of pixels observed on the imaging sensor. In addition, suitable edge detection or shape identifier algorithms or processing may be employed with analyzing standard objects, *e.g.*, boxes, cylindrical tubes, triangular packages, etc., to determine and/or confirm determined dimensional measurements.

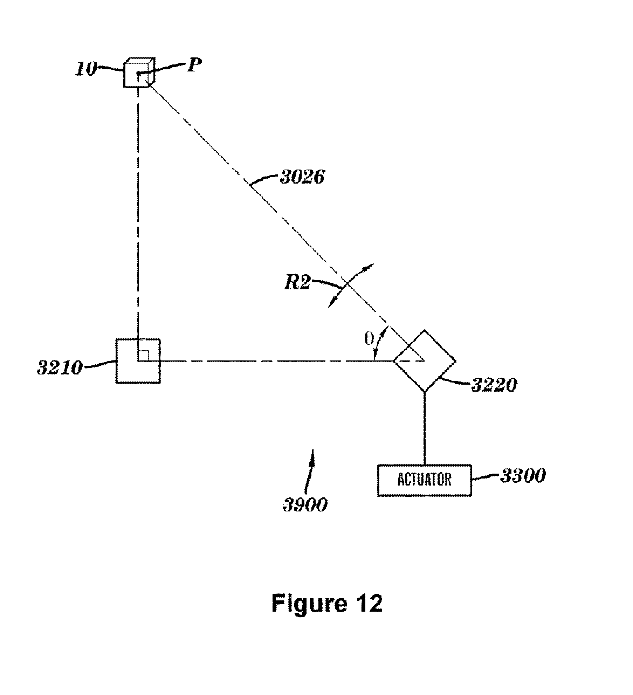

Figure 12 illustrates another embodiment of an imaging subsystem employable in terminal 1000 (Figure 4). Alignment of the second image may also be accomplished using a projected image pattern P from an aimer onto the object to determine the dimensions of the object. In activating the terminal, an aimer such as a laser aimer may project an aimer pattern onto the object. The projected aimer pattern may be a dot, point, or other pattern. The imaged object with the dot in the second image may be aligned, *e.g.*, the actuator effective to move the movable imaging subsystem so that the laser dot on the imaged second image aligns with the laser dot in the first image. The aimer pattern may be orthogonal lines or a series of dots that a user may be able to align adjacent to or along one or more sides or edges such as orthogonal sides or edges of the object.

In this exemplary embodiment, an imaging subsystem 3900 may include a first fixed imaging subsystem 3210, and a second movable imaging subsystem 3220. In addition, terminal 1000 (Figure 4) may include an aiming subsystem 600 (Figure 5) for projecting an aiming pattern onto the object, in accordance with aspects of the present invention. An actuator 3300 may be operably attached to imaging subsystem 3220 for moving imaging subsystem 3220. First fixed imaging subsystem 3210 is operable for obtaining a first image of the object having an aimer pattern P such as a point or other pattern. Second movable imaging subsystem 3220 is operable for obtaining a second image of the object. Actuator 3300 is operable to bring the second image into alignment with the first image be aligning point P in the second image with point p in the second image. For example, an optical axis 3026 of imaging subsystem 3220 may be pivoted, tilted or deflected, for example in the direction of double-headed arrow R2 in response to actuator 3300 to align the second image of the object with the object in the first image. In addition, either the first fixed imaging subsystem 3210, or the second movable imaging subsystem 3220 may also be employed to obtain an image of decodable indicia 15 (Figure 4) such as a decodable barcode.

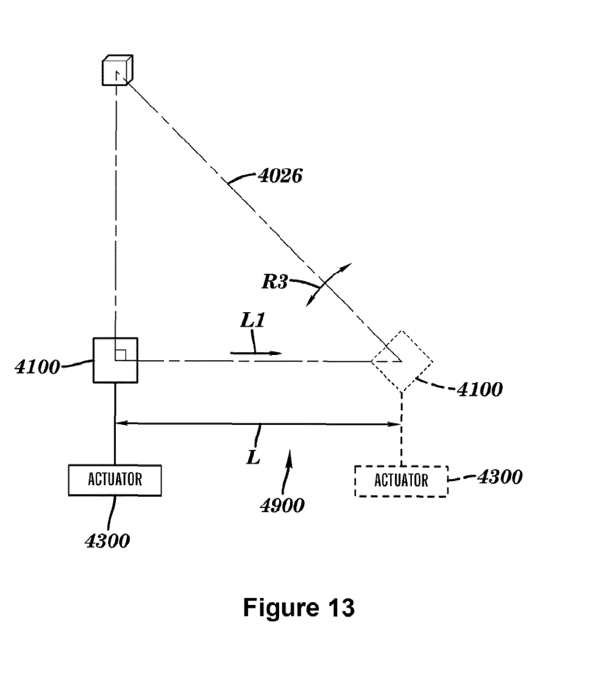

Figure 13 illustrates another embodiment of an imaging subsystem employable in terminal 1000 (Figure 4). In this embodiment, an imaging subsystem 4900 may be employed in accordance with aspects of the present invention. For example, an imaging subsystem 4900 may include a movable imaging subsystem 4100. An actuator 4300 may be operably attached to imaging subsystem 4100 for moving imaging subsystem 4100 from a first position to a second position remote from the first position. Movable imaging subsystem 4100 is operable for obtaining a first image of the object at the first position or orientation, and after taking a first image, moved or translate the movable imaging subsystem to a second location or orientation such as in the direction of arrow L1 using actuator 4300 to provide a distance L between the first position and the second position prior to aligning the object and obtaining a second image of the object. Actuator 4300 is also operable to bring the second image into alignment with the first image. For example, an optical axis 4026 of imaging subsystem 4100 may be pivoted, tilted or deflected, for example in the direction of double-headed arrow R3 in response to actuator 4100 to align the second image of the object with the object in the first image. As noted above, terminal 1000 (Figure 4) may include an aiming subsystem 600 (Figure 5) for projecting an aiming pattern onto the object in combination with imaging subsystem 4900. In addition, the movable imaging subsystem 4100 may also be employed to obtain an image of decodable indicia 15 (Figure 4) such as a decodable barcode.

From the present description of the various imaging subsystems and actuators, it will be appreciated that the second aligned image be performed in an operable time after the first image so that the effect of the user holding and moving the terminal when obtaining the images or the object moving when obtaining the image does not result in errors in determining the one or more dimensions of the object. It is desirable minimize the time delay between the first image and the second aligned image. For example, it may be suitable that the images be obtained within about 0.5 second or less, or possibly within about 1/8 second or less, about 1/16 second or less, or about 1/32 second or less.

With reference to Figures 6, 11, and 12, the actuators employed in the various embodiments may comprise one or more actuators which are positioned in the terminal to move the movable imagining subsystem in accordance with instructions received from processor 1060 (Figure 5). Examples of a suitable actuator include a shaped memory alloy (SMA) which changes in length in response to an electrical bias, a piezo actuator, a MEMS actuator, and other types of electromechanical actuators. The actuator may allow for moving or pivoting the optical axis of the imaging optics assembly, or in connection with the actuator in Figure 13, also moving the imaging subsystem from side-to-side along a line or a curve.

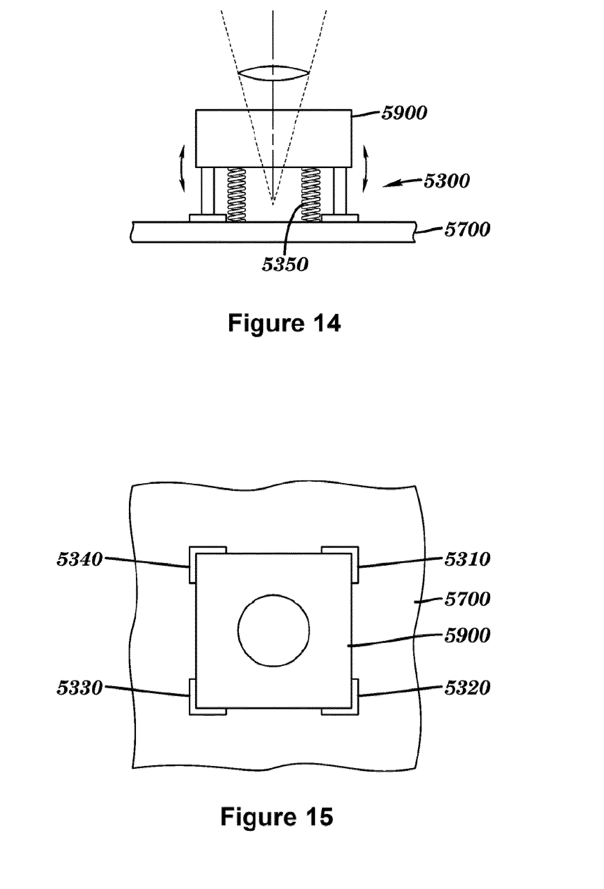

As shown in Figures 14 and 15, an actuator 5300 may comprise four actuators 5310, 5320, 5330, and 5430 disposed beneath each corner of an imaging subsystem 5900 to movable support the imaging subsystem on a circuit board 5700. The actuators may be selected so that they are capable of compressing and expanding and, when mounted to the circuit board, are capable of pivoting the imaging subsystem relative to the circuit board. The movement of imaging subsystem by the actuators may occur in response to a signal from the processor. The actuators may employ a shaped memory alloy (SMA) member which cooperates with one or more biasing elements 5350 such as springs, for operably moving the imaging subsystem. In addition, although four actuators are shown as being employed, more or fewer than four actuators may be used. The processor may process the comparison of the first image to the observed image obtained from the movable imaging subsystem, and, based on the comparison, determine the required adjustment of the position of the movable imaging subsystem to align the object in the second image with the obtained image in the first obtained image.

In addition, the terminal may include a motion sensor 1300 (Figure 5) operably connected to processor 1060 (Figure 5) via interface 1310 (Figure 5) operable to remove the effect of shaking due to the user holding the terminal at the same time as obtaining the first image and second aligned image which is used for determining one of more dimensions of the object as described above. A suitable system for use in the above noted terminal may include the image stabilizer for a microcamera disclosed in U.S. Patent No. 7,307,653 issued to Dutta, the entire contents of which are incorporated herein by reference.

The imaging optics assembly may employ a fixed focus imaging optics assembly. For example, the optics may be focused at a hyperfocal distance so that objects in the images from some near distance to infinity will be sharp. The imaging optics assembly may be focused at a distance of 15 inches or greater, in the range of 3 or 4 feet distance, or at other distances. Alternatively, the imaging optics assembly may comprise an autofocus lens. The exemplary terminal may include a suitable shape memory alloy actuator apparatus for controlling an imaging subassembly such as a microcamera disclosed in U.S. Patent No. 7,974,025 by Topliss, the entire contents of which are incorporated herein by reference.

From the present description, it will be appreciated that the exemplary terminal may be operably employed to separately obtain images and dimensions of the various sides of an object, *e.g.*, two or more of a front elevational view, a side elevational view, and a top view, may be separately obtained by a user similar to measuring an object as one would with a ruler.

The exemplary terminal may include a suitable autofocusing microcamera such as a microcamera disclosed in U.S. Patent Application Publication No. 2011/0279916 by Brown et al., the entire contents of which is incorporated herein by reference.

In addition, it will be appreciated that the described imaging subsystems in the embodiments shown in Figures 6, 12, and 13, may employ fluid lenses or adaptive lenses. For example, a fluid lens or adaptive lens may comprise an interface between two fluids having dissimilar optical indices. The shape of the interface can be changed by the application of external forces so that light passing across the interface can be directed to propagate in desired directions. As a result, the optical characteristics of a fluid lens, such its focal length and the orientation of its optical axis, can be changed. With use of a fluid lens or adaptive lens, for example, an actuator may be operable to apply pressure to the fluid to change the shape of the lens. In other embodiments, an actuator may be operable to apply a DC voltage across a coating of the fluid to decrease its water repellency in a process called electrowetting to change the shape of the lens. The exemplary terminal may include a suitable fluid lens as disclosed in U.S. Patent No. 8,027,096 issued to Feng et al., the entire contents of which is incorporated herein by reference.

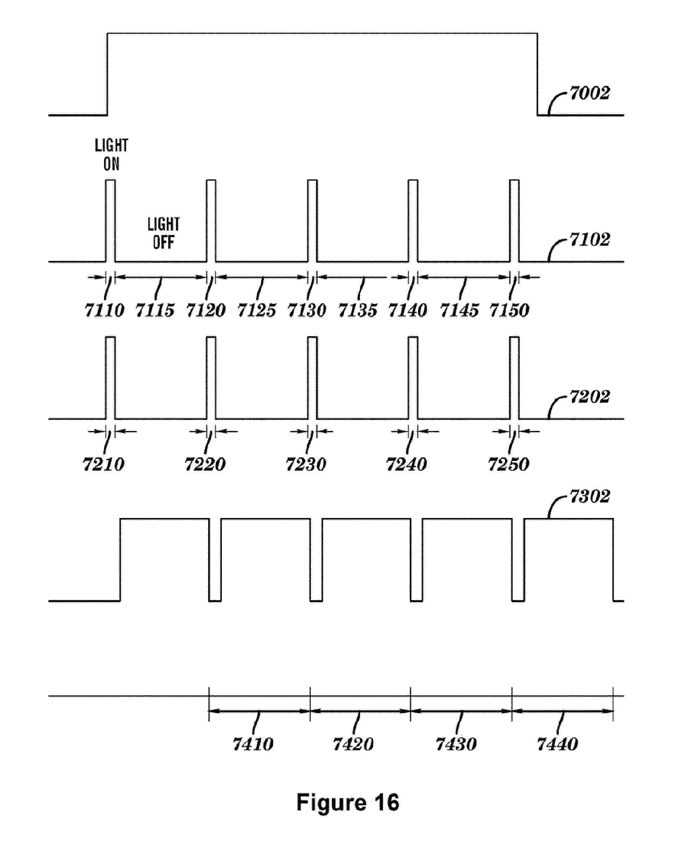

With reference to Figure 16, a timing diagram may be employed for obtaining a first image of the object for use in determining one or more dimensions as described above, and also used for decoding a decodable indicia disposed on an object using for example, the first imaging subassembly. At the same time or generally simultaneously after activation of the first imaging subassembly, the movable subassembly and actuator may be activated to determine one or more dimensions as described above. For example, the first frame of image data of the object using the first imaging subassembly may be used in combination with the aligned image of the object using the movable imaging subsystem.

A signal 7002 may be a trigger signal which can be made active by actuation of trigger 1220 (Figure 4), and which can be deactivated by releasing of trigger 1220 (Figure 4). A trigger signal may also become inactive after a time out period or after a successful decode of a decodable indicia.

A signal 7102 illustrates illumination subsystem 800 (Figure 5) having an energization level, *e.g.*, illustrating an illumination pattern where illumination or light is alternatively turned on and off. Periods 7110, 7120, 7130, 7140, and 7150 illustrate where illumination is on, and periods 7115, 7125, 7135, and 7145 illustrate where illumination is off.

A signal 7202 is an exposure control signal illustrating active states defining exposure periods and inactive states intermediate the exposure periods for an image sensor of a terminal. For example, in an active state, an image sensor array of terminal 1000 (Figure 4) is sensitive to light incident thereon. Exposure control signal 7202 can be applied to an image sensor array of terminal 1000 (Figure 4) so that pixels of an image sensor array are sensitive to light during active periods of the exposure control signal and not sensitive to light during inactive periods thereof. During exposure periods 7210, 7220, 7230, 7240, and 7250, the image sensor array of terminal 1000 (Figure 4) is sensitive to light incident thereon.

A signal 7302 is a readout control signal illustrating the exposed pixels in the image sensor array being transferred to memory or secondary storage in the imager so that the imager may be operable to being ready for the next active portion of the exposure control signal. In the timing diagram of Figure 16, period 7410 may be used in combination with movable imaging subsystem to determine one or more dimensions as described above. In addition, in the timing diagram of Figure 16, periods 7410, 7420, 7430, and 7440 are periods in which processer 1060 (Figure 5) may process one or more frames of image data. For example, periods 7410, 7420, 7430, and 7440 may correspond to one or more attempts to decode decodable indicia in which the image resulted during periods when indicia reading terminal 1000 (Figure 4) was illuminating the decodable indicia.

With reference again to Figure 5, indicia reading terminal 1000 may include an image sensor 1032 comprising multiple pixel image sensor array 1033 having pixels arranged in rows and columns of pixels, associated column circuitry 1034 and row circuitry 1035. Associated with the image sensor 1032 can be amplifier circuitry 1036 (amplifier), and an analog to digital converter 1037 which converts image information in the form of analog signals read out of image sensor array 1033 into image information in the form of digital signals. Image sensor 1032 can also have an associated timing and control circuit 1038 for use in controlling, *e.g.*, the exposure period of image sensor 1032, gain applied to the amplifier 1036, etc. The noted circuit components 1032, 1036, 1037, and 1038 can be packaged into a common image sensor integrated circuit 1040. Image sensor integrated circuit 1040 can incorporate fewer than the noted number of components. Image sensor integrated circuit 1040 including image sensor array 1033 and imaging lens assembly 200 can be incorporated in hand held housing 1014.

In one example, image sensor integrated circuit 1040 can be provided *e.g.*, by an MT9V022 (752x480 pixel array) or an MT9V023 (752x480 pixel array) image sensor integrated circuit available from Aptina Imaging (formerly Micron Technology, Inc.). In one example, image sensor array 1033 can be a hybrid monochrome and color image sensor array having a first subset of monochrome pixels without color filter elements and a second subset of color pixels having color sensitive filter elements. In one example, image sensor integrated circuit 1040 can incorporate a Bayer pattern filter, so that defined at the image sensor array 1033 are red pixels at red pixel positions, green pixels at green pixel positions, and blue pixels at blue pixel positions. Frames that are provided utilizing such an image sensor array incorporating a Bayer pattern can include red pixel values at red pixel positions, green pixel values at green pixel positions, and blue pixel values at blue pixel positions. In an embodiment incorporating a Bayer pattern image sensor array, processor 1060 prior to subjecting a frame to further processing can interpolate pixel values at frame pixel positions intermediate of green pixel positions utilizing green pixel values for development of a monochrome frame of image data. Alternatively, processor 1060 prior to subjecting a frame for further processing can interpolate pixel values intermediate of red pixel positions utilizing red pixel values for development of a monochrome frame of image data. Processor 1060 can alternatively, prior to subjecting a frame for further processing interpolate pixel values intermediate of blue pixel positions utilizing blue pixel values. An imaging subsystem of terminal 1000 can include image sensor 1032 and lens assembly 200 for focusing an image onto image sensor array 1033 of image sensor 1032.

In the course of operation of terminal 1000, image signals can be read out of image sensor 1032, converted, and stored into a system memory such as RAM 1080. Memory 1085 of terminal 1000 can include RAM 1080, a nonvolatile memory such as EPROM 1082 and a storage memory device 1084 such as may be provided by a flash memory or a hard drive memory. In one embodiment, terminal 1000 can include processor 1060 which can be adapted to read out image data stored in memory 1080 and subject such image data to various image processing algorithms. Terminal 1000 can include a direct memory access unit (DMA) 1070 for routing image information read out from image sensor 1032 that has been subject to conversion to RAM 1080. In another embodiment, terminal 1000 can employ a system bus providing for bus arbitration mechanism (*e.g.*, a PCI bus) thus eliminating the need for a central DMA controller. A skilled artisan would appreciate that other embodiments of the system bus architecture and/or direct memory access components providing for efficient data transfer between the image sensor 1032 and RAM 1080 are within the scope and the spirit of the present invention.

Reference still to Figure 5 and referring to further aspects of terminal 1000, imaging lens assembly 200 can be adapted for focusing an image of decodable indicia 15 located within a field of view 20 on the object onto image sensor array 1033. A size in target space of a field of view 20 of terminal 1000 can be varied in a number of alternative ways. A size in target space of a field of view 20 can be varied, *e.g.*, by changing a terminal to target distance, changing an imaging lens assembly setting, changing a number of pixels of image sensor array 1033 that are subject to read out. Imaging light rays can be transmitted about an imaging axis. Lens assembly 200 can be adapted to be capable of multiple focal lengths and multiple planes of optimum focus (best focus distances).

Terminal 1000 may include illumination subsystem 800 for illumination of target, and projection of an illumination pattern (not shown). Illumination subsystem 800 may emit light having a random polarization. The illumination pattern, in the embodiment shown can be projected to be proximate to but larger than an area defined by field of view 20, but can also be projected in an area smaller than an area defined by a field of view 20. Illumination subsystem 800 can include a light source bank 500, comprising one or more light sources. Light source assembly 800 may further include one or more light source banks, each comprising one or more light sources, for example. Such light sources can illustratively include light emitting diodes (LEDs), in an illustrative embodiment. LEDs with any of a wide variety of wavelengths and filters or combination of wavelengths or filters may be used in various embodiments. Other types of light sources may also be used in other embodiments. The light sources may illustratively be mounted to a printed circuit board. This may be the same printed circuit board on which an image sensor integrated circuit 1040 having an image sensor array 1033 may illustratively be mounted.

Terminal 1000 can also include an aiming subsystem 600 for projecting an aiming pattern (not shown). Aiming subsystem 600 which can comprise a light source bank can be coupled to aiming light source bank power input unit 1208 for providing electrical power to a light source bank of aiming subsystem 600. Power input unit 1208 can be coupled to system bus 1500 via interface 1108 for communication with processor 1060.

In one embodiment, illumination subsystem 800 may include, in addition to light source bank 500, an illumination lens assembly 300, as is shown in the embodiment of Figure 5. In addition to or in place of illumination lens assembly 300, illumination subsystem 800 can include alternative light shaping optics, *e.g.*, one or more diffusers, mirrors and prisms. In use, terminal 1000 can be oriented by an operator with respect to a target, (*e.g.*, a piece of paper, a package, another type of substrate, screen, etc.) bearing decodable indicia 15 5 in such manner that the illumination pattern (not shown) is projected on decodable indicia 15. In the example of Figure 5, decodable indicia 15 is provided by a 10 barcode symbol. Decodable indicia 15 could also be provided by a 2D barcode symbol or optical character recognition (OCR) characters. Referring to further aspects of terminal 1000, lens assembly 200 can be controlled with use of an electrical power input unit 1202 which provides energy for changing a plane of optimum focus of lens assembly 200. In one embodiment, electrical power input unit 1202 can operate as a controlled voltage source, and in another embodiment, as a controlled current source. Electrical power input unit 1202 can apply signals for changing optical characteristics of lens assembly 200, *e.g.*, for changing a focal length and/or a best focus distance of (a plane of optimum focus of) lens assembly 200. A light source bank electrical power input unit 1206 can provide energy to light source bank 500. In one embodiment, electrical power input unit 1206 can operate as a controlled voltage source. In another embodiment, electrical power input unit 1206 can operate as a controlled current source. In another embodiment electrical power input unit 1206 can operate as a combined controlled voltage and controlled current source. Electrical power input unit 1206 can change a level of electrical power provided to (energization level of) light source bank 500, *e.g.*, for changing a level of illumination output by light source bank 500 of illumination subsystem 800 for generating the illumination pattern.

In another aspect, terminal 1000 can include a power supply 1402 that supplies power to a power grid 1404 to which electrical components of terminal 1000 can be connected. Power supply 1402 can be coupled to various power sources, *e.g.*, a battery 1406, a serial interface 1408 (*e.g.*, USB, RS232), and/or AC/DC transformer 1410.

Further, regarding power input unit 1206, power input unit 1206 can include a charging capacitor that is continually charged by power supply 1402. Power input unit 1206 can be configured to output energy within a range of energization levels. An average energization level of illumination subsystem 800 during exposure periods with the first illumination and exposure control configuration active can be higher than an average energization level of illumination and exposure control configuration active.

Terminal 1000 can also include a number of peripheral devices including trigger 1220 which may be used to make active a trigger signal for activating frame readout and/or certain decoding processes. Terminal 1000 can be adapted so that activation of trigger 1220 activates a trigger signal and initiates a decode attempt. Specifically, terminal 1000 can be operative so that in response to activation of a trigger signal, a succession of frames can be captured by way of read out of image information from image sensor array 1033 (typically in the form of analog signals) and then storage of the image information after conversion into memory 1080 (which can buffer one or more of the succession of frames at a given time). Processor 1060 can be operative to subject one or more of the succession of frames to a decode attempt.

For attempting to decode a barcode symbol, *e.g.*, a one dimensional barcode symbol, processor 1060 can process image data of a frame corresponding to a line of pixel positions (*e.g.*, a row, a column, or a diagonal set of pixel positions) to determine a spatial pattern of dark and light cells and can convert each light and dark cell pattern determined into a character or character string via table lookup. Where a decodable indicia representation is a 2D barcode symbology, a decode attempt can comprise the steps of locating a finder pattern using a feature detection algorithm, locating matrix lines intersecting the finder pattern according to a predetermined relationship with the finder pattern, determining a pattern of dark and light cells along the matrix lines, and converting each light pattern into a character or character string via table lookup.

Terminal 1000 can include various interface circuits for coupling various peripheral devices to system address/data bus (system bus) 1500, for communication with processor 1060 also coupled to system bus 1500. Terminal 1000 can include an interface circuit 1028 for coupling image sensor timing and control circuit 1038 to system bus 1500, an interface circuit 1102 for coupling electrical power input unit 1202 to system bus 1500, an interface circuit 1106 for coupling illumination light source bank power input unit 1206 to system bus 1500, and an interface circuit 1120 for coupling trigger 1220 to system bus 1500. Terminal 1000 can also include display 1222 coupled to system bus 1500 and in communication with processor 1060, via an interface 1122, as well as pointer mechanism 1224 in communication with processor 1060 via an interface 1124 connected to system bus 1500. Terminal 1000 can also include keyboard 1226 coupled to systems bus 1500 and in communication with processor 1060 via an interface 1126. Terminal 1000 can also include range detector unit 1210 coupled to system bus 1500 via interface 1110. In one embodiment, range detector unit 1210 can be an acoustic range detector unit. Various interface circuits of terminal 1000 can share circuit components. For example, a common microcontroller can be established for providing control inputs to both image sensor timing and control circuit 1038 and to power input unit 1206. A common microcontroller providing control inputs to circuit 1038 and to power input unit 1206 can be provided to coordinate timing between image sensor array controls and illumination subsystem controls.

A succession of frames of image data that can be captured and subject to the described processing can be full frames (including pixel values corresponding to each pixel of image sensor array 1033 or a maximum number of pixels read out from image sensor array 1033 during operation of terminal 1000). A succession of frames of image data that can be captured and subject to the described processing can also be "windowed frames" comprising pixel values corresponding to less than a full frame of pixels of image sensor array 1033. A succession of frames of image data that can be captured and subject to the above described processing can also comprise a combination of full frames and windowed frames. A full frame can be read out for capture by selectively addressing pixels of image sensor 1032 having image sensor array 1033 corresponding to the full frame. A windowed frame can be read out for capture by selectively addressing pixels or ranges of pixels of image sensor 1032 having image sensor array 1033 corresponding to the windowed frame. In one embodiment, a number of pixels subject to addressing and read out determine a picture size of a frame. Accordingly, a full frame can be regarded as having a first relatively larger picture size and a windowed frame can be regarded as having a relatively smaller picture size relative to a picture size of a full frame. A picture size of a windowed frame can vary depending on the number of pixels subject to addressing and readout for capture of a windowed frame.

Terminal 1000 can capture frames of image data at a rate known as a frame rate. A typical frame rate is 60 frames per second (FPS) which translates to a frame time (frame period) of 16.6 ms. Another typical frame rate is 30 frames per second (FPS) which translates to a frame time (frame period) of 33.3 ms per frame. A frame rate of terminal 1000 can be increased (and frame time decreased) by decreasing of a frame picture size.

In numerous cases herein wherein systems and apparatuses and methods are described as having a certain number of elements, it will be understood that such systems, apparatuses and methods can be practiced with fewer than the mentioned certain number of elements. Also, while a number of particular embodiments have been described, it will be understood that features and aspects that have been described with reference to each particular embodiment can be used with each remaining particularly described embodiment.

In another aspect the present invention embraces an object-analysis system. The object-analysis system can be used to measure the dimensions (e.g., dimensioning) of an object (e.g., a box, a package, a container, a vessel). In particular, the object-analysis system according to the present invention may be used to measure the dimensions (e.g., length, width, and height) of a package, which dimensions may then be used to calculate the appropriate shipping costs (e.g., postage) of shipping the package via a courier (e.g., post office or private courier service). The object-analysis system according to the present invention advantageously replaces more time-consuming, traditional techniques employed to measure package size (e.g., volumetric weight), such as measuring with a tape measure, with a relatively faster technique that permits a user to obtain a measurement by placing the user's hand(s) on the object. The object-analysis system is capable of tracking the movements of the user's hand(s) and calculating the dimensions of the object based on the positioning of the hand(s) (e.g., by determining the distance between the user's hands). The object-analysis system according to the present invention advantageously detects the boundaries of the package by the movement and/or positioning of the user's hands, which may be especially useful in circumstances where automatic detection of the package's boundaries (e.g., edges) is inhibited, for example by the position of the package, lighting conditions, or the presence of other objects in the field-of-view.

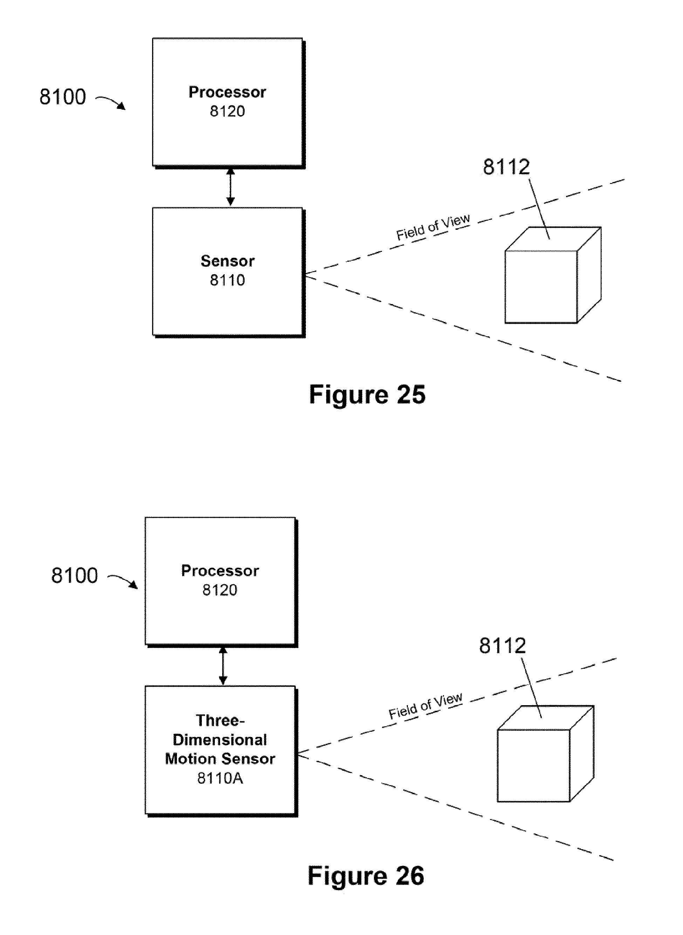

Referring now to Figures 25 and 26, the object-analysis system 8100 according to the present invention includes a sensor 8110. The sensor 8110 detects the movement of a user's hand(s) within a three-dimensional space (e.g., three-dimensional physical space or x,y,z space). The size of the three-dimensional space in which the sensor 8110 may be capable of detecting movement may vary, and is generally determined by the capabilities of the particular sensor 8110. When measuring packages having a relatively large size (e.g., greater than about 0.125 m$^3$), a sensor 8110 capable of detecting movement in relatively larger three-dimensional space may be required. Conversely, when measuring packages having a relatively small size (e.g., less than about 0.125 m$^3$), the sensor 8110 may only be required to detect movement in a relatively smaller three-dimensional space. It will be appreciated by one skilled in the art that references to the movement of a user's hand are not limited to movements of the entire hand. Rather, such movements may include movements of a user's finger(s) (e.g., placing a package in between two of the user's fingers).

The sensor 8110 may be any type of sensor capable of detecting the movement of a user's hand(s) within a three dimensional space. Typically, the sensor 8110 is a three-dimensional motion sensor 8110A capable of generating a two-dimensional image representing a three-dimensional subject. For example, the three-dimensional motion sensor 8110A may be a range camera (e.g., structured light 3D scanner) capable of projecting a light beam (e.g., an infrared light beam) into a three-dimensional space, and then analyzing the pattern of the reflected light to determine the distance of each pixel from the range camera (e.g., analyzing deformities of each light pixel). Alternatively, a time-of-flight camera could be used as the three-dimensional motion sensor, whereby a light source (e.g., laser) is projected onto the field-of-view. The distance from the camera to the objects in the field-of view is determined by recording the time it takes for the light beam to return to the sensor 8110A, and then calculate the distance as a function of the time and speed of light. The sensor 8110 may include other technology such as a wired glove (e.g., dataglove, cyberglove) to track the location of the user's hands in three-dimensional space, a stereoscopic camera, radar tracking device, microwave tracking device, or the like.

The object-analysis system also includes a processor 8120 (e.g., a computer processor). The processor 8120 is communicatively connected to the sensor 8110. The processor 8120 receives information (e.g., data) from the sensor 8110 regarding the three-dimensional positioning and/or movements within the sensor's 8110 field-of-view. The sensor 8110 may transmit information to the processor 8120 via a wireless connection (e.g., wifi connection, personal area network connection, Bluetooth connection, Zigbee connection). Alternatively, the sensor 8110 may transmit information to the processor 8120 via a wired connection (e.g., a serial cable connection, a universal serial bus (USB) connection, or a computer system bus connection).

The processor 8120 determines the dimensions of an object 8112 based on the detected movements of the user's hand(s). For example, when a user places the user's hands on opposing sides of an object 8112 in the three-dimensional space within the sensor's 8110 field-of-view, the sensor 8110 detects the movement and positioning of the user's hands. The sensor 8110 transmits the information relating to the movement and/or positioning of the user's hands to the processor 8120. The processor 8120 then analyzes the information received from the sensor 8110 and calculates the distance between the user's hands. Because the user's hands are substantially adjacent to opposing sides of the object 8112, the processor's 8120 measurement of the distance between the user's hands closely approximates the object's 8112 dimension (e.g., length, width, or height) defined by the distance between the opposing sides of the object 8112. As mentioned, the user could alternatively use the user's fingers to help record a dimension. For smaller objects 8112, in particular, the user could position a first finger on a first side of the object 8112 and a second finger on an opposing side of the object 8112. The sensor 8110 then detects the movement and positioning of the user's fingers, and transmits that information to the processor 8120. The processor 8120 then calculates the distance between the user's first finger and second finger to determine the desired dimension. Using this approach, the object-analysis system 8100 according to the present invention could facilitate the dimensioning of small packages and even smaller objects. For example, certain manufacturing applications may require measurements of certain components. To the extent those components could be held in one hand, the user could obtain a dimensional measurement by placing the user's fingers on opposing sides of the object. This could be particularly useful in assembly lines where a priority is placed on rapid and accurate measurement of components.

To allow the system to more readily identify the user's hands (or fingers) as they pass through the three-dimensional space, and to distinguish the user's hands from the object 8112, the object-identification system 8100 may include an identification marker identifying at least a portion of the user's hand. The identification marker may include gloves, wristbands, or rings that, when detected by the sensor 8110, could assist the object-identification system 8100 in recognizing the user's hands and distinguishing them from objects 8112 or other items in the three-dimensional space.

In an alternative exemplary embodiment, the object-identification system 8100 may obtain dimensional measurements of an object 8112 by reference to a user's hand and another measurement point. Typically, the other measurement point is the supporting surface (e.g., floor, table) on which the object 8112 is positioned. For example, the user positions the user's hand on the top surface of the object 8112, and the sensor 8110 could detect the movement and/or positioning of the user's hand with respect to the supporting surface. Using the positioning and movement information provided by the sensor 8110, the processor 8120 determines the dimension (in this case, the height) of the object 8112 by measuring the distance from the user's hand to the supporting surface. To obtain a second dimensional measurement, the user then repositions the object 8112 such that the distance between the top surface of the repositioned object 8112 and the supporting surface represents the desired second dimension (e.g., width) of the object 8112.

In another embodiment, the sensor 8110 detects and records the movement of the user's hand over the surfaces of the object 8112. The user may move one hand or both hands over the surfaces of the object 8112. The processor 8120 analyzes the information regarding the movement of the user's hand, and derives from that information the edges between the different planar surfaces. For example, the processor 8120 can derive the presence of an edge from a substantially 90-degree change of direction in the movement of the user's hand. The processor 8120 uses the information regarding the edge locations to calculate the dimensions of the object 8112.

In an exemplary embodiment, the object-analysis system 8100 according to the present invention initiates a measurement of a dimension of the object 8112 upon a triggering event by the user. Typically, the triggering event is the user holding the user's hands still (e.g. not moving the user's hands) within the three-dimensional area for a pre-determined period of time. For example, after the user places the user's hands on opposing sides of the object 8112, the user holds the user's hands in place for a pre-determined time period (e.g., about 1 second). Upon detecting that the hands have not moved for the pre-determined period of time, the processor 8120 initiates a calculation of the distance between the user's hands based on the information relayed to the processor 8120 by the sensor 8110. By eliminating the need for the user to manually initiate the dimension measurement (e.g., by pushing a button), the object-analysis system 8100 according to the present invention advantageously provides the user the ability to rapidly progress through each measurement.

In another embodiment, the processor 8120 may derive the dimensions of the object 8112 as a function of the time that it takes for the user to reposition the user's hands from one surface to another.

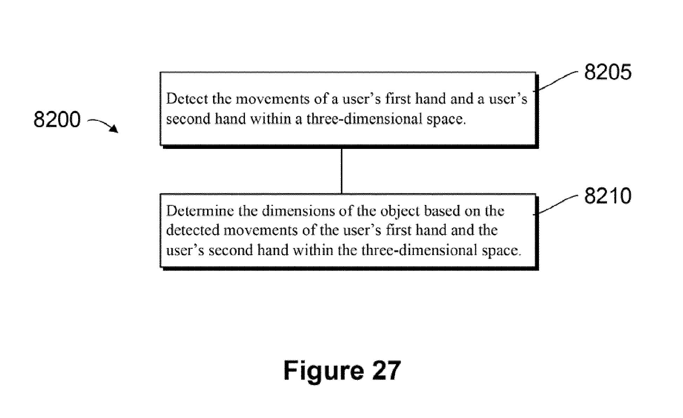

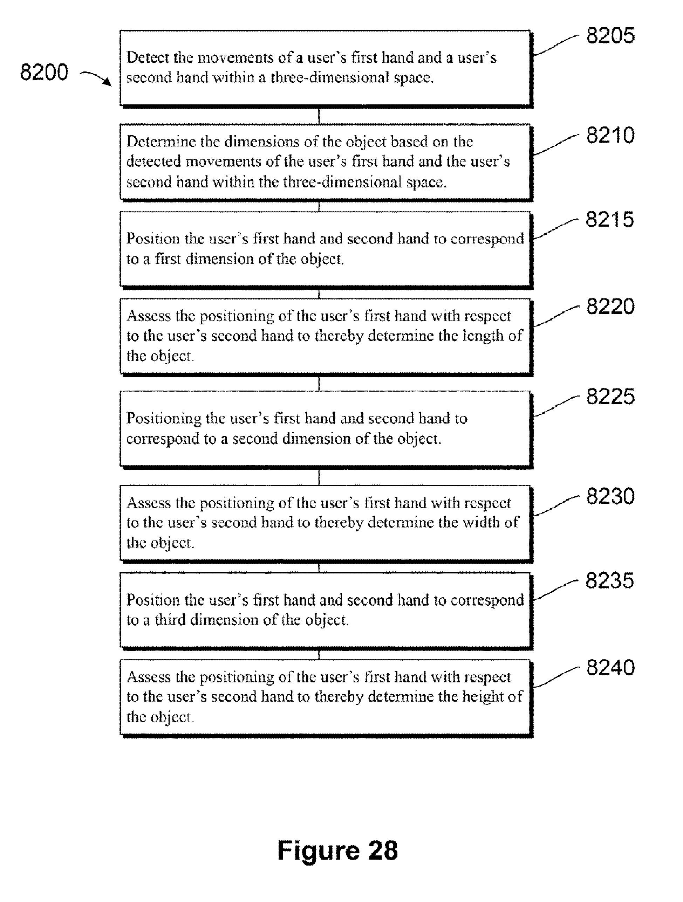

In another aspect, the present invention embraces a method of determining the dimensions of an object 8112. Referring now to Figures 27 through 28, an exemplary method 8200 according the present disclosure includes detecting the movements of a user's first hand and a user's second hand within a three-dimensional space (8205). Typically, the movements are detected using a sensor 8110 (e.g., a three-dimensional sensor 8110A, a range camera). The method 8200 also includes determining the dimensions of the object 8112 based on the detected movements of the user's first hand and the user's second hand within the three-dimensional space (8210). Typically, the dimensions are determined using a processor 8120 configured to calculate the dimensions of the object 8112 based on information about the movement of the user's hands in the three-dimensional space.

In an exemplary embodiment, the method 8200 according to the present invention also includes positioning the user's first hand and second hand to correspond to a first dimension of the object 8112 (8215). The method 8200 also includes assessing the positioning of the user's first hand with respect to the user's second hand to thereby determine the length of the object 8112 (8220).

In an exemplary embodiment, the method 8200 according to the present invention also includes positioning the user's first hand and second hand to correspond to a second dimension of the object 8112 (8225). The method 8200 also includes assessing the positioning of the user's first hand with respect to the user's second hand to thereby determine the width of the object 8112 (8230).

In an exemplary embodiment, the method 8200 according to the present invention also includes positioning the user's first hand and second hand to correspond to a third dimension of the object 8112 (8235). The method 8200 also includes assessing the positioning of the user's first hand with respect to the user's second hand to thereby determine the height of the object 8112 (8240).

When measuring more than one dimension (e.g., a first dimension and a second dimension) using the method 8200 according to the present invention, the user may position the user's hands on the object 8112 in any order. In other words, the user may first position the user's hands to correspond to the object's length, or the user may first position the user's hands to correspond to the object's width.

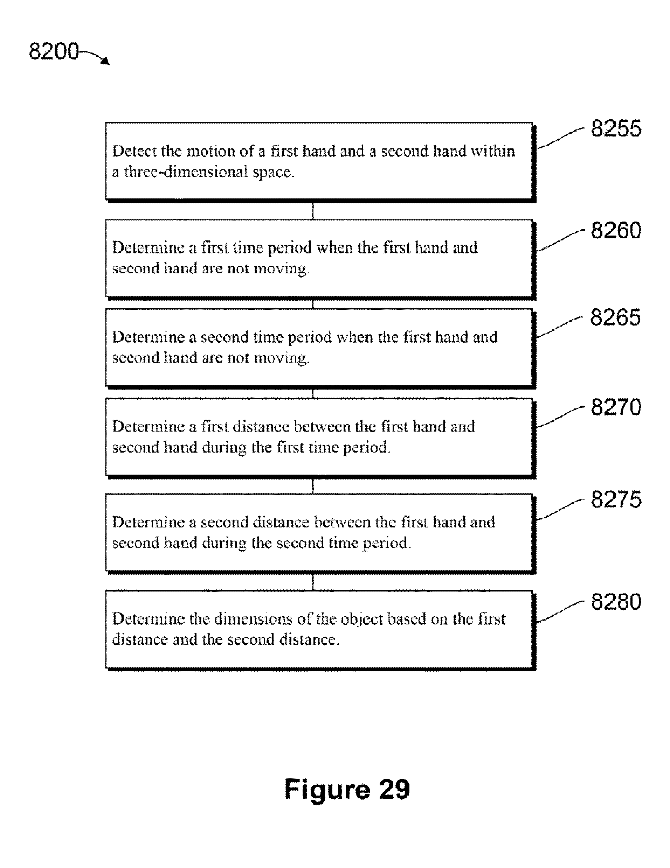

Referring now to Figure 29, in another aspect, the present invention embraces a method 8200 of determining the dimensions of an object 8112. The method 8200 includes detecting the motion of a first hand and a second hand within a three-dimensional space (8255). The method 8200 also includes determining a first time period when the first hand and second hand are not moving (8260). The method 8200 also includes determining a second time period when the first hand and second hand are not moving (8265). The method 8200 also includes determining a first distance between the first hand and second hand during the first time period (8270), and determining a second distance between the first hand and second hand during the second time period (8275). The method 8200 also includes determining the dimensions of the object based on the first distance and the second distance (8280).

Another exemplary method of determining the dimensions of an object utilizes one or more of the foregoing methods to improve the accuracy of the method. In particular, the method includes capturing a range image of the object and capturing a visible image of the object (e.g., using a range camera with both an infra-red sensor and an RGB or monochrome camera). The range image and visible image are then aligned based on the relative positions from which the two images were captured.

In an exemplary embodiment, the method includes performing a first method of determining the object's dimensions based on either the range image or the visible image. The method then includes performing a second method of determining the object's dimensions based on the other image (*i.e.*, not the image used in the first method). The results of the first and second methods are then compared. If the compared results are not within a suitable threshold, new images may be captured or the first and second methods may be performed again using the original images.

In another exemplary embodiment, the method includes simultaneously performing a first method of determining the object's dimensions based on the range image and a second method of determining the object's dimensions based on the visible image. When one of the methods determines one of the object's dimensions, the determined dimension is provided to the other method, and the other method adjusts its process for determining the object's dimensions. For example, the other method may assume the determined dimension to be correct or the other method may verify the determined dimension in view of the image it is using to determine the object's dimensions. In other words, the method performs both dimensioning methods simultaneously and dynamically. Such dynamic sharing of information between dimensioning methods facilitates the efficient determination of reliable dimensions of the object.

As would be recognized by one of ordinary skill in the art upon consideration of the present disclosure, the foregoing method may be implemented by an appropriately configured computing device (*e.g.*, including a processor and memory).

The foregoing disclosure has been presented specifically within the context of determining the dimensions of an object such as a package. The systems, methods, and devices may also be used to determine other geometric and spatial information (*e.g.*, distance to a point of interest, angles, areas, and/or volumes for an object of interest). Furthermore, the systems, methods, and devices may be used in the context of: educational games; measurement applications which require 3D measurements; physics experiments; official estimates, recordings, and/or restorations of incident sites (*e.g.*, by a police officer); measuring a space for installing a device (*e.g.*, in a home construction); selling, purchasing, and/or estimating bulk materials; estimating the area of a wall (*e.g.*, in anticipation of purchasing paint or drywall); measuring objects that are out of reach; comparing and/or monitoring changes in an object's size and/or shape; estimating and/or monitoring the remaining amount of supply and/or displayed items or materials; counting and dimensioning multiple objects; and aligning and/or installing equipment into a desired position. Such implementations could be achieved using a cell phone or other portable device with suitable software installed thereupon.

The foregoing disclosure has presented a number of systems, methods, and devices for determining the dimensions of an object. Although methods have been disclosed with respect to particular systems and/or devices, the methods may be performed using different systems and/or devices than those particularly disclosed. Similarly, the systems and devices may perform different methods than those methods specifically disclosed with respect to a given system or device. Furthermore, the systems and devices may perform multiple methods for determining the dimensions of an object (*e.g.*, to increase accuracy). Aspects of each of the methods for determining the dimensions of an object may be used in or combined with other methods. Components (*e.g.*, a range camera, camera system, scale, and/or computing device) of a given disclosed system or device may be incorporated into other disclosed systems or devices to provide increased functionality. Finally, the disclosed systems, method, and device may include devices for or steps of storing the determined dimensions of an object in a computer-aided design (CAD) file or other type of file than can be read by a 3-dimensional printer.

Exemplary Embodiments:

A Embodiments

A1. An object analysis system, comprising:

a scale for measuring the weight of an object;

a range camera configured to produce a range image of an area in which the object is located; and

a computing device configured to determine the dimensions of the object based, at least in part, on the range image.

A2. The object analysis system according to embodiment A1, wherein the range camera is separate from the computing device.

A3. The object analysis system according to embodiment A1, wherein the scale comprises a top surface having markings to guide a user to place the object in a preferred orientation.

A4. The object analysis system according to embodiment A1, wherein the computing device estimates a reference plane from the range image; and
the scale comprises a top surface having markings to facilitate the computing device's estimation of the reference plane.

A5. The object analysis system according to embodiment A1, wherein the computing device is configured to execute shipment billing software.

A6. The object analysis system according to embodiment A1, wherein the scale transmits the measured weight of the object to the computing device.

A7. The object analysis system according to embodiment A6, wherein the scale transmits the measured weight to the computing device via a wireless connection.

A8. The object analysis system according to embodiment A1, wherein the scale transmits the measured weight of the object to a host platform configured to execute shipment billing software.

A9. The object analysis system according to embodiment A8, wherein the scale transmits the measured weight of the object to the host platform via a wired connection.

A10. The object analysis system according to embodiment A1, wherein the computing device is configured to:

calculate the density of the object based on the determined dimensions and determined weight; and

determine if the calculated density exceeds a realistic density threshold.

A11. The object analysis system according to embodiment A1, comprising a microphone for capturing audio from a user;
wherein the computing device is configured for converting the captured audio to text.

A12. An object analysis system, comprising:

a scale for measuring the weight of an object;

a range camera configured to produce a range image of an area in which the object is located and a visible image of the scale's measured weight of the object; and

a computing device configured to determine the dimensions of the object based, at least in part, on the range image and to determine the weight of the object based, at least in part, on the visible image.

A13. The object analysis system according to embodiment A12, wherein:

the scale comprises an analog scale having a gauge; and

the visible image produced by the range camera includes the scale's gauge.

A14. The object analysis system according to embodiment A12, wherein:

the scale comprises a digital scale having a display; and

the visible image produced by the range camera includes the scale's display.

A15. The object analysis system according to embodiment A12, wherein the object analysis system transmits the weight of the object and determined dimensions to a host platform configured to execute shipment billing software.

A16. The object analysis system according to Embodiment A15, wherein the object analysis system transmits the weight of the object and determined dimensions to the host platform via a wireless connection.

A17. An object analysis system, comprising:

a scale for measuring the weight of an object;

a range camera configured to produce a range image of an area in which the object is located, project a visible laser pattern onto the object, and produce a visible image of the object;

a computing device configured to determine the dimensions of the object based, at least in part, on the range image and the visible image of the object.

A18. The object analysis system according to embodiment A17, wherein the computing device is configured to:

calculate the density of the object based on the determined dimensions and determined weight; and

determine if the calculated density exceeds a realistic density threshold.

A19. The object analysis system according to embodiment A17, wherein the computing device estimates a reference plane from the range image; and
the scale comprises a top surface having markings to facilitate the computing device's estimation of the reference plane.

A20. The object analysis system according to embodiment A17, wherein the computing device is configured to execute shipment billing software.

B Embodiments

B1. A terminal for measuring at least one dimension of an object, comprising:

a range camera configured to produce a range image of an area in which the object is located;

a visible camera configured to produce a visible image of an area in which the object is located; and

a display;

wherein the range camera, visible camera, and display are fixed in position and orientation relative to each other; and

wherein the display is configured to present information associated with (*i*) the range camera's field of view and (*ii*) the visible camera's field of view.

B2. The terminal according to embodiment B1, wherein:

the range camera's field of view is narrower than the visible camera's field of view; and

the display is configured to present (*i*) the visible image produced by the visible camera and (*ii*) an outlined shape on the displayed visible image corresponding to the range camera's field of view.

B3. The terminal according to embodiment B2, wherein the outlined shape is a rectangle.

B4. The terminal according to embodiment B1, wherein the display is configured to present information associated with the optimal orientation of the range camera and visible camera with respect to the object.

B5. The terminal according to embodiment B1, wherein the display is configured to present (*i*) the visible image produced by the visible camera and (*ii*) a symbol on the displayed visible image corresponding to the optical center of the range camera's field of view.

B6. The terminal according to embodiment B5, wherein the symbol comprises a crosshair target having three prongs.

B7. The terminal according to embodiment B6, wherein:

the object is a rectangular box; and

the display is configured to show the three prongs of the crosshairs on the displayed visible image in an orientation that corresponds to the optimal orientation of the range camera and visible camera with respect to a corner of the rectangular box.

B8. The terminal according to embodiment B1, wherein:

the object is cylindrically shaped having a medial axis; and

the display is configured to show (*i*) the visible image produced by the visible camera and (*ii*) a line on the displayed visible image in an orientation that corresponds to the optimal orientation of the range camera and visible camera with respect to the medial axis of the obj ect.

B9. The terminal according to embodiment B1, wherein:

the object is cylindrically shaped having a base; and

the display is configured to show (*i*) the visible image produced by the visible camera and (*ii*) an ellipse on the displayed visible image in an orientation that corresponds to the optimal orientation of the range camera and visible camera with respect to the base of the obj ect.

B 10. A terminal for measuring at least one dimension of an obj ect, comprising:

a range camera configured to produce a range image of an area in which the object is located;

a visible camera configured to produce a visible image of an area in which the object is located; and

a display;

wherein the range camera, visible camera, and display are fixed in position and orientation relative to each other;

wherein the range camera's field of view is narrower than the visible camera's field of view; and

the display is configured to present (*i*) the visible image produced by the visible camera and (*ii*) an outlined shape on the displayed visible image corresponding to the range camera's field of view.

B11. The terminal according to embodiment B10, wherein the outlined shape is a rectangle.

B12. The terminal according to embodiment B10, wherein the display is configured to present information associated with the optimal orientation of the range camera and visible camera with respect to the object.

B13. The terminal according to embodiment B10, wherein the display is configured to present (*i*) the visible image produced by the visible camera and (*ii*) a symbol on the displayed visible image corresponding to the optical center of the range camera's field of view.

B14. The terminal according to embodiment B13, wherein:

the object is a rectangular box;

the symbol comprises a crosshair target having three prongs; and

the display is configured to show the three prongs of the crosshairs on the displayed visible image in an orientation that corresponds to the optimal orientation of the range camera and visible camera with respect to a corner of the rectangular box.

B15. A terminal for measuring at least one dimension of an object, comprising:

a range camera configured to produce a range image of an area in which the object is located;

a visible camera configured to produce a visible image of an area in which the object is located; and

a display;

wherein the display is configured to present information associated with (*i*) the range camera's field of view and (*ii*) the visible camera's field of view; and

wherein the display is configured to present information associated with the optimal orientation of the range camera and visible camera with respect to the object.

B16. The terminal according to embodiment B15, wherein:

the range camera's field of view is narrower than the visible camera's field of view; and

the display is configured to present (*i*) the visible image produced by the visible camera and (*ii*) an outlined shape on the displayed visible image corresponding to the range camera's field of view.

B17. The terminal according to embodiment B16, wherein the outlined shape is a rectangle.

B18. The terminal according to embodiment B15, wherein the display is configured to present (*i*) the visible image produced by the visible camera and (*ii*) a symbol on the displayed visible image corresponding to the optical center of the range camera's field of view.

B19. The terminal according to embodiment B15, wherein:

the object is cylindrically shaped having a medial axis; and

the display is configured to show (*i*) the visible image produced by the visible camera and (*ii*) a line on the displayed visible image in an orientation that corresponds to the optimal orientation of the range camera and visible camera with respect to the medial axis of the obj ect.

B20. The terminal according to embodiment B 15, wherein:

the object is cylindrically shaped having a base; and

the display is configured to show (i) the visible image produced by the visible camera and (*ii*) an ellipse on the displayed visible image in an orientation that corresponds to the optimal orientation of the range camera and visible camera with respect to the base of the obj ect.

C Embodiments

C1. An object analysis system, comprising:

a scale for measuring the weight of an object;

a range camera configured to produce a range image of an area in which the object is located;

a computing device configured to determine the dimensions of the object based, at least in part, on the range image.

C2. An object analysis system according to Embodiment C1, wherein:

the range camera is configured to produce a visible image of the scale's measured weight of the object; and

the computing device is configured to determine the weight of the object based, at least in part, on the visible image.

27

C3. The object analysis system according to any one of Embodiments C1-C2, wherein the range camera is separate from the computing device.

C4. The object analysis system according to any one of Embodiments C1-C2, wherein the range camera and the computing device are part of a same device.

C5. The object analysis system according to any one of Embodiments C2-C4, wherein:

the scale comprises an analog scale having a gauge; and

the visible image produced by the range camera includes the scale's gauge.

C6. The object analysis system according to any one of Embodiments C2-C4, wherein:

the scale comprises a digital scale having a display; and

the visible image produced by the range camera includes the scale's display.

C7. The object analysis system according to any one of Embodiments C1-C6, wherein the scale comprises a top surface having markings to guide a user to place the object in a preferred orientation.

C8. The object analysis system according to any one of Embodiments C1-C7, wherein the computing device estimates a reference plane from the range image; and
the scale comprises a top surface having markings to facilitate the computing device's estimation of the reference plane.

C9. The object analysis system according to any one of Embodiments C1-C8, wherein the computing device is configured to execute shipment billing software.

C10. The object analysis system according to any one of Embodiments C1, C3, C4, and C7-C9, wherein the scale transmits the measured weight of the object to the computing device.

C11. The object analysis system according to Embodiment C10, wherein the scale transmits the measured weight to the computing device via a wireless connection.

C12. The object analysis system according to Embodiment C10, wherein the scale transmits the measured weight to the computing device via a wired connection.

C13. The object analysis system according to Embodiment C10, wherein the scale transmits the measured weight to the computing device via a USB connection.

C14. The object analysis system according to any one of Embodiments C2-C8, wherein the object analysis system transmits the weight of the object and determined dimensions to a host platform configured to execute shipment billing software.

C15. The object analysis system according to Embodiment C14, wherein the object analysis system transmits the weight of the object and determined dimensions to the host platform via a wireless connection.

C16. The object analysis system according to Embodiment C14, wherein the object analysis system transmits the weight of the object and determined dimensions to the host platform via a wired connection.

C17. The object analysis system according to Embodiment C14, wherein the object analysis system transmits the weight of the object and determined dimensions to the host platform via a USB connection.

C18. The object analysis system according to any one of Embodiments C1, C3, C4, C7, and C8, wherein the scale transmits the measured weight of the object to a host platform configured to execute shipment billing software.

C19. The object analysis system according to Embodiment C18, wherein the scale transmits the measured weight of the object to the host platform via a wireless connection.

C20. The object analysis system according to Embodiment C18, wherein the scale transmits the measured weight of the object to the host platform via a wired connection.

C21. The object analysis system according to Embodiment C18, wherein the scale transmits the measured weight of the object to the host platform via a USB connection.

C22. The object analysis system according to any one of Embodiments C1-C21, comprising a microphone for capturing audio from a user;
wherein the computing device is configured for converting the captured audio to text.

C23. The object analysis system according to Embodiment 22, wherein the computing device converts the captured audio to text by (*i*) transmitting the captured audio to a speech-to-text module and (*ii*) receiving the text.

C24. The object analysis system according to Embodiment C23, wherein the computing device comprises the speech-to-text module.

C25. The object analysis system according to Embodiment C23, wherein the computing device does not comprise the speech-to-text module.

C26. The object analysis system according to any one of Embodiments C22-C25, wherein the text comprises address information associated with the object.

C27. The object analysis system according to any one of Embodiments C22-C26, wherein the text comprises information identifying the particular object to be measured.

C28. The object analysis system according to any one of Embodiments C22-C27, wherein the text comprises classification information of the object to be measured.

C29. The object analysis system according to any one of Embodiments C22-C28, wherein the computing device is configured to enter the text in shipment billing software.

C30. The object analysis system according to any one of Embodiments C2-C29, wherein the computing device is configured to:

calculate the density of the object based on the determined dimensions and determined weight; and

determine if the calculated density exceeds a realistic density threshold.

C31. The object analysis system according to any one of Embodiments C1-C30, wherein:

the range camera is configured to (*i*) project a visible laser pattern onto the object and (*ii*) produce a visible image of the object; and

the computing device is configured to determine the dimensions of the object based, at least in part, on the visible image of the object.

C32. The object analysis system according to any one of Embodiments C1-C31, wherein:

the scale and the range camera are fixed in position and orientation relative to each other; and

the computing device is configured to determine the dimensions of the object based, at least in part, on ground plane data of the area in which the object is located.

C33. The object analysis system according to Embodiment C32, wherein the computing device is configured to verify the validity of the ground plane data by identifying a planar region in the range image that corresponds to a ground plane.

C34. The object analysis system according to any one of Embodiments C32-C33, wherein the ground plane data comprises data generated by capturing an initial range image and identifying a planar region in the initial range image that corresponds to a ground plane.

C201. A method for determining the dimensions of an object, comprising:

capturing a range image of a scene that includes the object; and

determining the dimensions of the object based, at least in part, on (*i*) the range image and (*ii*) ground plane data of the area in which the object is located.

C202. The method according to Embodiment C201, comprising verifying the validity of the ground plane data by identifying a planar region in the range image that corresponds to a ground plane.

C203. The method according to any one of Embodiments C201-202, wherein the ground plane data comprises data generated by capturing an initial range image and identifying a planar region in the initial range image that corresponds to a ground plane.

C301. A terminal for measuring at least one dimension of an object, comprising:

a range camera configured to produce a range image of an area in which the object is located;

a visible camera configured to produce a visible image of an area in which the object is located; and

a display;

wherein the range camera, visible camera, and display are fixed in position and orientation relative to each other; and

wherein the display is configured to present information associated with (*i*) the range camera's field of view and (*ii*) the visible camera's field of view.

C302. The terminal according to Embodiment C301, wherein:

the range camera's field of view is narrower than the visible camera's field of view; and
the display is configured to present (*i*) the visible image produced by the visible camera and (*ii*) an outlined shape on the displayed visible image corresponding to the range camera's field of view.

C303. The terminal according to Embodiment C302, wherein the outlined shape is a rectangle.

C304. The terminal according to any one of Embodiments C301-C303, wherein the display is configured to present information associated with the optimal orientation of the range camera and visible camera with respect to the object.

C305. The terminal according to any one of Embodiments C301-C303, wherein the display is configured to present (*i*) the visible image produced by the visible camera and (*ii*) a symbol on the displayed visible image corresponding to the optical center of the range camera's field of view.

C306. The terminal according to Embodiment C305, wherein the symbol comprises a crosshair target having three prongs.

C307. The terminal according to Embodiment C306, wherein:

the object is a rectangular box; and

the display is configured to show the three prongs of the crosshairs on the displayed visible image in an orientation that corresponds to the optimal orientation of the range camera and visible camera with respect to a corner of the rectangular box.

C308. The terminal according to any one of Embodiments C301-C304, wherein:

the object is cylindrically shaped having a medial axis; and

the display is configured to show (*i*) the visible image produced by the visible camera and (*ii*) a line on the displayed visible image in an orientation that corresponds to the optimal orientation of the range camera and visible camera with respect to the medial axis of the obj ect.

C309. The terminal according to any one of Embodiments C301-C304 and C308, wherein:

the object is cylindrically shaped having a base; and

the display is configured to show (*i*) the visible image produced by the visible camera and (*ii*) an ellipse on the displayed visible image in an orientation that corresponds to the optimal orientation of the range camera and visible camera with respect to the base of the obj ect.

C401. A method for determining the dimensions of an object, comprising:

projecting a laser pattern onto the object;

capturing an image of the projected pattern on the object; and

determining the dimensions of the object based, at least in part, on the captured image.

C402. The method according to Embodiment C401, wherein the object is rectangular shaped.

C403. The method according to any one of Embodiments C401-C402, wherein the step of capturing an image is performed using a camera system with a known angular magnification.

C404. The method according to any one of Embodiments C401-C403, comprising determining the edges of the object based, at least in part, on the captured image.

C405. The method according to any one of Embodiments C401-C404, comprising determining the relative size of the faces of the object based, at least in part, on the captured image.

C406. The method according to any one of Embodiments C401-C405, comprising determining the relative orientation of the faces of the object based, at least in part, on the captured image.

C407. The method according to any one of Embodiments C401-C406, comprising determining the relative size of the faces of the object based, at least in part, on the captured image.

C408. The method according to any one of Embodiments C401-C407, wherein the step of capturing an image is performed using a camera system, the method comprising determining the distance between the camera system and the object.

C409. The method according to Embodiment C408, wherein the step of determining the distance between the camera system and the object comprises using sonar ranging techniques.

C410. The method according to any one of Embodiments C401-C409, comprising determining the size of each face of the object based, at least in part, on the captured image.

D Embodiments

D401. A method for determining the dimensions of an object, comprising:

projecting a laser pattern onto the object;

capturing an image of the projected pattern on the object; and

determining the dimensions of the object based, at least in part, on the captured image.

D402. The method according to Embodiment D401, wherein the object is rectangular shaped.

D403. The method according to any one of Embodiments D401-D402, wherein the step of capturing an image is performed using a camera system with a known angular magnification.

D404. The method according to any one of Embodiments D401-D403, wherein the step of capturing an image is performed using a camera system with known field of view characteristics.

D405. The method according to any Embodiment D404, wherein the known field of view characteristics comprise size of the field of view, aspect ratio, and/or distortion.

D406. The method according to any one of Embodiments D404-D405, comprising determining the dimensions of the object based on the captured image and the camera system's known field of view characteristics.

D407. The method according to any one of Embodiments D401-D406, comprising determining the edges of the object based, at least in part, on the captured image.

D408. The method according to any one of Embodiments D401-D407, comprising determining the relative size of the faces of the object based, at least in part, on the captured image.

D409. The method according to any one of Embodiments D401-D408, comprising determining the relative orientation of the faces of the object based, at least in part, on the captured image.

D410. The method according to any one of Embodiments D401-D409, comprising determining the relative size of the faces of the object based, at least in part, on the captured image.

D411. The method according to any one of Embodiments D401-D410, wherein the step of capturing an image is performed using a camera system, the method comprising determining the distance between the camera system and the object.

D412. The method according to Embodiment D411, wherein the step of determining the distance between the camera system and the object comprises using sonar ranging techniques.

D413. The method according to any one of Embodiments D401-D412, comprising determining the size of each face of the object based, at least in part, on the captured image.

D414. The method according to any one of Embodiments D401-D413, wherein the step of projecting a laser pattern onto the object comprises projecting a laser pattern such that the center of the projected laser pattern aligns with the center of the captured image.

D415. The method according to any one of Embodiments D401-D414, wherein the steps of projecting a laser pattern onto the object and capturing an image of the projected pattern on the object are performed using an integrated device that projects the laser pattern and captures the image.

D416. The method according to any one of Embodiments D401-D413, wherein the step of projecting a laser pattern onto the object comprises projecting a laser pattern having a central feature such that the central feature of the projected laser pattern aligns with the center of the captured image.

D417. The method according to any one of Embodiments D401-D413 and D416, wherein the steps of projecting a laser pattern onto the object and capturing an image of the projected pattern on the object are performed using an integrated device that projects the laser pattern and captures the image.

D418. The method according to any one of Embodiments D401-D413 and D416, wherein:

the step of capturing an image of the projected pattern on the object is performed using a conventional camera system; and

the step of projecting a laser pattern onto the object is performed using a detachable projector attached to the conventional camera system.

D419. The method according to any one of Embodiments D401-D413, wherein:

the step of projecting a laser pattern onto the object comprises projecting a laser pattern having a central feature; and

the step of capturing an image of the projected pattern on the object comprises capturing an image such that the center of the captured image is outside the projected pattern's central feature.

D420. The method according to any one of Embodiments D401-D413 and D419, wherein the steps of projecting a laser pattern onto the object and capturing an image of the projected pattern on the object are performed using an integrated device that projects the laser pattern and captures the image.

D421. The method according to any one of Embodiments D401-D413 and D419, wherein:

the step of capturing an image of the projected pattern on the object is performed using a conventional camera system; and

the step of projecting a laser pattern onto the object is performed using a detachable projector attached to the conventional camera system.

D422. The method according to any one of Embodiments D401-D421, wherein:

the step of capturing an image of the projected pattern on the object is performed using a camera system having a field of view and dimensioning range; and

the step of projecting a laser pattern onto the object comprises projecting a laser pattern such that the projected laser pattern is within the camera system's field of view over a substantial portion of the camera system's dimensioning range.

D423. The method according to any one of Embodiments D401-D422, wherein:

the step of capturing an image of the projected pattern on the object is performed using a camera system having a field of view and dimensioning range; and

the step of projecting a laser pattern onto the object comprises projecting a laser pattern having a central feature such that the projected laser pattern's central feature is within the camera system's field of view over a substantial portion of the camera system's dimensioning range.

E Embodiments

E1. An object-analysis system, comprising:

a sensor for detecting the movement of a user's hand(s) within a three-dimensional space; and

a processor communicatively connected to the sensor, the processor being configured to determine the dimensions of an object based on the detected movements of the user's hand(s).

E2. The object-analysis system according to Embodiment E1, wherein the sensor is a three-dimensional motion sensor.

E3. The object-analysis system according to Embodiment E1, wherein the sensor transmits information to the processor via a wireless connection.

E4. The object-analysis system according to Embodiment E1, wherein the sensor transmits information to the processor via a wired connection.

E5. The object-analysis system according to Embodiment E1, wherein the sensor transmits information to the processor via a USB connection.

E6. An object-analysis system, comprising:

a three-dimensional motion sensor for detecting the movements of a user's hand within a three-dimensional space with respect to an object; and

a processor communicatively connected to the three-dimensional motion sensor, the processor being configured to determine the dimensions of the object based on the detected movements of the user's hand.

E7. The object-analysis system according to Embodiment E6, wherein the three-dimensional motion sensor is configured to detect the movements of both of the user's hands within a three-dimensional space with respect to an object.

E8. The object-analysis system according to Embodiment E6, wherein the three-dimensional motion sensor transmits information to the processor via a wireless connection.

E9. The object-analysis system according to Embodiment E6, wherein the three-dimensional motion sensor transmits information to the processor via a wired connection.

E10. The object-analysis system according to Embodiment E6, wherein the three-dimensional motion sensor transmits information to the processor via a USB connection.

E11. A method of determining the dimensions of an object, comprising:

detecting the movements of a user's first hand and a user's second hand within a three-dimensional space; and

determining the dimensions of the object based on the detected movements of the user's first hand and the user's second hand within the three-dimensional space.

E12. The method according to Embodiment E11, comprising
positioning the user's first hand and second hand to correspond to a first dimension of the object;
assessing the positioning of the user's first hand with respect to the user's second hand to thereby determine the length of the object.

E13. The method according to Embodiment E12, comprising
positioning the user's first hand and second hand to correspond to a second dimension of the object;
assessing the positioning of the user's first hand with respect to the user's second hand to thereby determine the width of the object.

E14. The method according to Embodiment E11, comprising
positioning the user's first hand and second hand to correspond to a third dimension of the object;
assessing the positioning of the user's first hand with respect to the user's second hand to thereby determine the height of the object.

E15. A method of determining the dimensions of an object, comprising:

detecting the motion of a first hand and a second hand within a three-dimensional space;
determining a first time period when the first hand and second hand are not moving;
determining a second time period when the first hand and second hand are not moving;
determining a first distance between the first hand and second hand during the first time period;

determining a second distance between the first hand and second hand during the second time period; and determining the dimensions of the object based on the first distance and the second distance.

E16. The method of embodiment E15, comprising:

determining a third time period when the first hand and second hand are not moving;

determining a third distance between the first hand and second hand during the second time period; and

determining the dimensions of the object based on the first distance, the second distance, and the third distance.

E17. The method of embodiment E15, wherein the motion of a first hand and a second hand within a three-dimensional space is detected with a range image camera.

E18. The method of embodiment E15, wherein the first time period is about 1 second.

F Embodiments

F1. A method for determining the dimensions of an object, comprising:

projecting a laser pattern onto the object;

capturing an image of the projected pattern on the object; and

determining the dimensions of the object based, at least in part, on the captured image.

F2. The method according to embodiment F1, wherein the step of capturing an image is performed using a camera system with known field of view characteristics.

F3. The method according to embodiment F2, wherein the known field of view characteristics comprise size of the field of view, aspect ratio, and/or distortion.

F4. The method according to embodiment F1, wherein the step of capturing an image is performed using a camera system, the method comprising determining the distance between the camera system and the object.

F5. The method according to embodiment F1, wherein the steps of projecting a laser pattern onto the object and capturing an image of the projected pattern on the object are performed using an integrated device that projects the laser pattern and captures the image.

F6. The method according to embodiment F1, wherein:

the step of projecting a laser pattern onto the object comprises projecting a laser pattern having a central feature; and

the step of capturing an image of the projected pattern on the object comprises capturing an image such that the center of the captured image is outside the projected pattern's central feature.

F7. The method according to embodiment F1, wherein:

the step of capturing an image of the projected pattern on the object is performed using a camera system having a field of view and dimensioning range; and

the step of projecting a laser pattern onto the object comprises projecting a laser pattern having a central feature such that the projected laser pattern's central feature is within the camera system's field of view over a substantial portion of the camera system's dimensioning range.

F8. A method for determining the dimensions of an object, comprising:

projecting a laser pattern onto the object, the laser pattern comprising laser lines having a profile with a divergence angle;

capturing an image of the projected pattern on the object using a camera system; and

determining the dimensions of the object based, at least in part, on the captured image.

F9. The method according to embodiment F8, wherein;

the camera system comprises pixels having a field of view divergence; and

the laser lines' divergence angle corresponds to the combined field of view divergence of about 10 or less of the camera system's pixels.

F10. The method according to embodiment F8, wherein;

the camera system comprises pixels having a field of view divergence; and

the laser lines' divergence angle corresponds to the combined field of view divergence of between about 2 and 10 of the camera system's pixels.

F11. The method according to embodiment F8, wherein the laser lines' divergence angle is between about 1 and 30 milliradians.

F12. The method according to embodiment F8, wherein the laser lines' divergence angle is between about 2 and 20 milliradians.

F13. The method according to embodiment F8, wherein the laser lines' divergence angle is between about 3 and 10 milliradians.

F14. A method for determining the dimensions of an object, comprising:

projecting a laser pattern onto the object, the laser pattern comprising a rectangle;

capturing an image of the projected pattern on the object; and

determining the dimensions of the object based, at least in part, on the captured image.

F15. The method according to embodiment F14, wherein the step of projecting a laser pattern onto the object comprises projecting a laser pattern such that the rectangle aligns with the center of the captured image.

F16. The method according to embodiment F14, wherein:

the laser pattern's rectangle has a known dimension; and

the step of determining the dimension of the object comprises determining the dimensions of the object based on the rectangle's known dimension.

F17. The method according to embodiment F14, wherein:

the step of capturing an image comprises capturing an image with a camera system having a field of view; and

the step of projecting a laser pattern comprises projecting the laser pattern such that the center of the laser pattern's rectangle aligns with the center of the camera system's field of view.

F18. The method according to embodiment F14, wherein:

the step of capturing an image comprises capturing an image with a camera system having a field of view; and

the step of projecting a laser pattern comprises projecting the laser pattern such that the center of the camera system's field of view is within the laser pattern's rectangle.

F19. The method according to embodiment F14, wherein:

the step of capturing an image comprises capturing an image with a camera system having a field of view; and

the step of projecting a laser pattern comprises projecting the laser pattern such that the center of the camera system's field of view is outside of the laser pattern's rectangle.

F20. The method according to embodiment F14, wherein:

the step of capturing an image comprises capturing an image with a camera system having an optical axis; and

the step of projecting a laser pattern comprises projecting the laser pattern at an angle to the camera system's optical axis.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

**Claims**

1. An object analysis system, comprising:

   a scale for measuring the weight of an object;
   a range camera configured to produce a range image of an area in which the object is located; and
   a computing device configured to determine the dimensions of the object based, at least in part, on the range image.

2. The object analysis system according to claim 1, wherein the range camera is separate from the computing device.

3. The object analysis system according to claim 1, wherein the scale comprises a top surface having markings to guide a user to place the object in a preferred orientation.

4. The object analysis system according to claim 1, wherein the computing device estimates a reference plane from the range image; and
   the scale comprises a top surface having markings to facilitate the computing device's s estimation of the reference plane.

5. The object analysis system according to claim 1, wherein the computing device is configured to execute shipment billing software.

6. The object analysis system according to claim 1, wherein the scale transmits the measured weight of the object to the computing device.

7. The object analysis system according to claim 6, wherein the scale transmits the measured weight to the computing device via a wireless connection.

8. The object analysis system according to claim 1, wherein the scale transmits the measured weight of the object to a host platform configured to execute shipment billing software.

9. The object analysis system according to claim 8, wherein the scale transmits the measured weight of the object to the host platform via a wired connection.

10. The object analysis system according to claim 1, wherein the computing device is configured to:

   calculate the density of the object based on the determined dimensions and determined weight; and
   determine if the calculated density exceeds a realistic density threshold.

11. The object analysis system according to claim 1, comprising a microphone for capturing audio from a user; wherein the computing device is configured for converting the captured audio to text.

12. The object analysis system according to claim 1, wherein:

   the range camera is configured to produce a visible image of the scale's measured weight of the object; and
   the computing device is configured to determine the weight of the object based, at least in part, on the visible image.

13. The object analysis system according to claim 12, wherein:

   the scale comprises an analog scale having a gauge; and
   the visible image produced by the range camera includes the scale's gauge.

14. The object analysis system according to claim 12, wherein:

   the scale comprises a digital scale having a display; and
   the visible image produced by the range camera includes the scale's display.

15. The object analysis system according to claim 12, wherein the object analysis system transmits the weight of the object and determined dimensions to a host platform configured to execute shipment billing software.

**Figure 1**

104 — COMPUTING DEVICE

PROCESSOR — 106

MEMORY — 108

18 — MICRO-PHONE

RANGE CAMERA

102

HOST PLATFORM — 17

11

110

112

16

14

13

12

d

114

104

COMPUTING DEVICE

PROCESSOR — 106

MEMORY — 108

110

112

RANGE CAMERA

102

d

**Figure 2**

220

CAPTURING A RANGE IMAGE OF A SCENE THAT INCLUDES THE OBJECT — 222

DETERMINING THE DIMENSIONS ASSOCIATED WITH THE OBJECT BASED, AT LEAST IN PART, ON THE RANGE IMAGE — 224

**Figure 3**

**Figure 4**

**Figure 5**

**Figure 6**

OBTAINING FIRST IMAGE DATA OF THE OBJECT ⎯602

MOVING AN OPTICAL AXIS OF AT LEAST ONE IMAGING SUBSYSTEM TO ALIGN SECOND IMAGE DATA OF THE OBJECT WITH THE FIRST IMAGE DATA, THE SECOND IMAGE DATA BEING DIFFERENT FROM THE FIRST IMAGE DATA ⎯604

DETERMINING AT LEAST ONE OF A HEIGHT, A WIDTH, AND A DEPTH DIMENSION OF THE OBJECT BASED ON MOVING THE OPTICAL AXIS OF THE AT LEAST ONE IMAGING SUBSYSTEM TO ALIGN THE IMAGE OF THE OBJECT IN THE SECOND IMAGE DATA WITH THE IMAGE OF THE OBJECT IN THE FIRST IMAGE DATA ⎯606

**Figure 7**

**Figure 8**

**Figure 9**

Figure 10

**Figure 11**

**Figure 12**

4026

R3

L1

4100

4100

L

4900

ACTUATOR

4300

ACTUATOR

4300

Figure 13

**Figure 14**

**Figure 15**

**Figure 16**

## Camera FOV: Near Field

Laser Pattern

### Figure 17

## Camera FOV: Far Field

Laser Pattern

### Figure 18

Figure 19

Figure 20

## Camera FOV: Near Field

Laser Pattern

**Figure 21**

## Camera FOV: Far Field

Laser Pattern

**Figure 22**

## Camera FOV: Near Field

## Figure 23

## Camera FOV: Far Field

## Figure 24

**Figure 25**

**Figure 26**

8200

Detect the movements of a user's first hand and a user's second hand within a three-dimensional space.

8205

Determine the dimensions of the object based on the detected movements of the user's first hand and the user's second hand within the three-dimensional space.

8210

# Figure 27

8200

8205
Detect the movements of a user's first hand and a user's second hand within a three-dimensional space.

8210
Determine the dimensions of the object based on the detected movements of the user's first hand and the user's second hand within the three-dimensional space.

8215
Position the user's first hand and second hand to correspond to a first dimension of the object.

8220
Assess the positioning of the user's first hand with respect to the user's second hand to thereby determine the length of the object.

8225
Positioning the user's first hand and second hand to correspond to a second dimension of the object.

8230
Assess the positioning of the user's first hand with respect to the user's second hand to thereby determine the width of the object.

8235
Position the user's first hand and second hand to correspond to a third dimension of the object.

8240
Assess the positioning of the user's first hand with respect to the user's second hand to thereby determine the height of the object.

## Figure 28

8200

Detect the motion of a first hand and a second hand within a three-dimensional space. — 8255

Determine a first time period when the first hand and second hand are not moving. — 8260

Determine a second time period when the first hand and second hand are not moving. — 8265

Determine a first distance between the first hand and second hand during the first time period. — 8270

Determine a second distance between the first hand and second hand during the second time period. — 8275

Determine the dimensions of the object based on the first distance and the second distance. — 8280

## Figure 29

Europäisches
Patentamt

European
Patent Office

Office européen
des brevets

# EUROPEAN SEARCH REPORT

Application Number

EP 13 18 6043

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 102 10 813 A1 (SARTORIUS GMBH [DE]) 16 October 2003 (2003-10-16) * paragraph [0012] - paragraph [0020] * * figures 1, 2 * | 1-15 | INV. G01G19/414 G01B11/02 |
| X | DE 10 2007 037282 A1 (ACCU SORT SYSTEMS INC [US]) 27 March 2008 (2008-03-27) * paragraph [0018] - paragraph [0019] * * paragraph [0034] - paragraph [0041] * * paragraph [0044] * * paragraph [0067] - paragraph [0078] * * paragraph [0110] * * figures 1-7 * | 1-15 | ADD. G01B11/25 G07B17/00 |
| X | US 2011/286007 A1 (PANGRAZIO JOHN GREGORY [US] ET AL) 24 November 2011 (2011-11-24) * paragraph [0010] - paragraph [0011] * * paragraph [0016] - paragraph [0018] * * paragraph [0043] - paragraph [0055] * * figures 1-8 * | 1-15 | |

TECHNICAL FIELDS
SEARCHED      (IPC)

G01G
G01B
G07B

The present search report has been drawn up for all claims

| Place of search | Date of completion of the search | Examiner |
|---|---|---|
| The Hague | 19 February 2014 | Koch, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

ANNEX TO THE EUROPEAN SEARCH REPORT
ON EUROPEAN PATENT APPLICATION NO.

EP 13 18 6043

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2014

| Patent document cited in search report | Publication date | Patent family member(s) | Publication date |
|---|---|---|---|
| DE 10210813 A1 | 16-10-2003 | NONE | |
| DE 102007037282 A1 | 27-03-2008 | DE 102007037282 A1<br>FR 2906883 A1<br>GB 2440818 A<br>JP 2008151764 A<br>US 2008035390 A1<br>US 2008164074 A1 | 27-03-2008<br>11-04-2008<br>13-02-2008<br>03-07-2008<br>14-02-2008<br>10-07-2008 |
| US 2011286007 A1 | 24-11-2011 | CA 2800211 A1<br>EP 2572159 A1<br>US 2011286007 A1<br>US 2012081714 A1<br>WO 2011146796 A1 | 24-11-2011<br>27-03-2013<br>24-11-2011<br>05-04-2012<br>24-11-2011 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 27855911 A
- US 47197312 A
- US 7307653 B, Dutta

- US 7974025 B, Topliss
- US 20110279916 A, Brown
- US 8027096 B, Feng